# EUROPEAN PATENT APPLICATION

(11) **EP 4 535 329 A1**
(43) Date of publication of application: **09.04.2025**
(21) Application number: 23815749.9
(22) Date of filing: 15.05.2023
(51) Int. Cl.: G08G 1/09, H04W 28/06

(54) **COMMUNICATION DEVICE AND COMMUNICATION METHOD**

(30) Priority: 31.05.2022 JP 2022088382
(71) Applicant: DENSO CORPORATION, Aichi-pref., 448-8661 (JP)
(72) Inventor: YAMASHIRO Takahisa, Kariya- city Aichi 4488661 (JP)
(74) Representative: Winter, Brandl - Partnerschaft mbB
(86) International application number: PCT/JP2023/018099
(87) International publication number: WO 2023/233989

(57) **Abstract**

A communication device (21) is configured to be able to communicate a message including object information. The communication device (21) includes a grouping unit (31) configured to determine whether to perform grouping of a plurality of objects perceived using a sensor, a message generation unit (32) configured to generate a message including aggregation information that aggregates the plurality of objects into an object group based on the grouping, and a message transmission unit (33) configured to transmit a message including the aggregation information.

## Description

### CROSS REFERENCE TO RELATED APPLICATION

The present application claims the benefit of priority from Japanese Patent Application No. 2022-088382 filed on May 31, 2022. The entire disclosure of the above application is incorporated herein by reference.

### TECHNICAL FIELD

The disclosure of this specification relates to a technology for communicating a message that include object information.

### BACKGROUND

Patent Literature 1 discloses communicating a message including information about individual objects perceived by a sensor.

### RELATED ART LITERATURE

### PATENT LITERATURE

Patent Literature 1: JP 6844642 B

### SUMMARY

For example, in densely populated urban areas where there are a large number of road users such as pedestrians, the number of objects detected by the sensor also increases. However, when communicating messages including information about each individual object, the amount of information or the number of messages increases according to the number of objects. **It** is concerned that communication loads or processing loads in message processing increases.

It is an object of the disclosure of this specification to provide a communication device and a communication method that reduce one or both of the communication load and the processing load in message processing.

According to an aspect disclosed here, a communication device is configured to communicate a message including object information, and includes: a grouping unit configured to determine whether to perform grouping of a plurality of objects detected by a sensor; a message generation unit configured to generate the message including aggregation information in which the plurality of objects are aggregated into an object group based on the grouping; and a message transmission unit configured to transmit the message including the aggregation information.

Further, according to another disclosed aspect, a communication method is executed by at least one processor for communicating a message including object information, and the method includes: determining whether to perform grouping of a plurality of objects detected by a sensor; generating the message including aggregation information in which the plurality of objects are aggregated into an object group based on the grouping; and transmitting the message including the aggregation information.

According to these aspects, the transmitted message includes the aggregation information of the object group based on the grouping of the plurality of objects perceived using the sensor. By aggregating the object information that can be grouped together into the object group, it is possible to reduce an increase in the amount of information or the number of messages as compared to a case in which each of objects is transmitted as individual information. Therefore, it is possible to reduce one or both of the communication load and the processing load in message processing.

Further, according to another aspect disclosed here, a communication device is configured to communicate a message including object information, and includes: a grouping unit configured to determine whether to perform grouping of a plurality of objects detected by a sensor; a message generation unit configured to determine whether information of each object and each object group after aggregation based on the grouping is to be included in a message, excludes the object and the object group that are determined not to be included in the message, and generates a message including information of the object and object group that are determined to be included in the message; and a message transmission unit configured to transmit the generated message.

According to such an aspect, the message to be transmitted is a message that excludes the object and the object group that are determined not to be included in the message among the plurality of objects perceived using the sensor. Further, this determination is performed for the information of each object and each object group after aggregation based on the grouping. That is, by aggregating the object information and determining the necessity of transmission, it is possible to reduce the increase in the amount of information or the number of messages. Therefore, it is possible to reduce one or both of the communication load and the processing load in message processing.

The reference signs in parentheses in the claims exemplarily indicate a correspondence relationship with the portions of embodiments to be described later, and are not intended to limit the technical scope.

### BRIEF DESCRIPTION OF THE DRAWINGS

FIG. 1 is a diagram showing an example architecture of a V2X communication device.
FIG. 2 is a diagram showing an example of a V2X message.
FIG. 3 is a diagram showing a logical interface for a CPS and other layers.
FIG. 4 is a functional block diagram of the CPS.
FIG. 5 is a diagram showing a basic structure of the CPM.
FIG. 6 is a diagram showing a configuration of a POC.
FIG. 7 is a diagram illustrating an extraction method of object data.
FIG. 8 is a diagram illustrating an extraction method of the object data.
FIG. 9 is a diagram of a system configuration.
FIG. 10 is a diagram of a configuration of a controller.
FIG. 11 is a flowchart showing processes for generating and transmitting the CPM.
FIG. 12 is a flowchart showing detailed processes of S3 in FIG. 11.
FIG. 13 is a flowchart showing processes executed subsequent to FIG. 11.
FIG. 14 is a flowchart illustrating detailed processes of S4 of FIG. 11.
FIG. 15 is a flowchart illustrating detailed processes of S6 of FIG. 11.
FIG. 16 is a flowchart showing detailed processes of S3 in FIG. 11.
FIG. 17 is a flowchart showing detailed processes of S6 in FIG. 11.
FIG. 18 is a flowchart illustrating detailed processes of S6 of FIG. 11.
FIG. 19 is a flowchart showing processes executed before S1 in FIG. 11

### EMBODIMENTS FOR CARRYING OUT INVENTION

Hereinafter, multiple embodiments will be described with reference to the drawings. It is noted that the same reference numerals are attached to the corresponding constituent elements in each embodiment, and redundant explanation may be omitted. In each of the embodiments, when only a part of the configuration is described, the remaining parts of the configuration may adopt corresponding parts of other embodiments. Further, not only the combinations of the configurations explicitly shown in the description of the respective embodiments, but also the configurations of the plurality of embodiments can be partially combined even if they are not explicitly shown if there is no problem in the combinations in particular.

### (First Embodiment)

A communication device of the present disclosure is capable of communicating a message including object information. In one aspect, the communication device is mounted on a vehicle. The communication device may also be referred to as a V2X communication device. The V2X communication device may perform communication between vehicles, between vehicles and bicycles, between vehicles and mobile terminals, between vehicles and roadside units, and the like. The V2X communication device may correspond to an in-vehicle device of a vehicle or may be included in the in-vehicle device. The in-vehicle device may be called an OBU (On-Board Unit).

The communication device may correspond to a roadside unit that constitutes the infrastructure, and the roadside unit may be called an RSU (Road Side Unit). The communication device may be one element constituting an ITS (Intelligent Transport System). When it is one element of the ITS, the communication device may correspond to or be included in an ITS station (ITS-S). The ITS-S is a device that exchanges information, and may be any of an OBU, an RSU, or a mobile terminal, or may be included in any of them. The mobile terminal is, for example, a PDA (Personal Digital Assistant) or a smartphone.

The communication device may correspond to a WAVE (Wireless Access in Vehicular) device disclosed in IEEE 1609, or may be included in a WAVE device.

In the present embodiment, the communication device is assumed to be the V2X communication device. This V2X communication device has the function of providing a Collective Perception Service (hereinafter referred to as CPS). In the CPS, the V2X communication device communicates a Collective Perception Message (hereinafter referred to as CPM). It should be noted that even when the communication device is the RSU or the mobile terminal, the same or similar methods as those disclosed below can be applied.

### (V2X Communication)

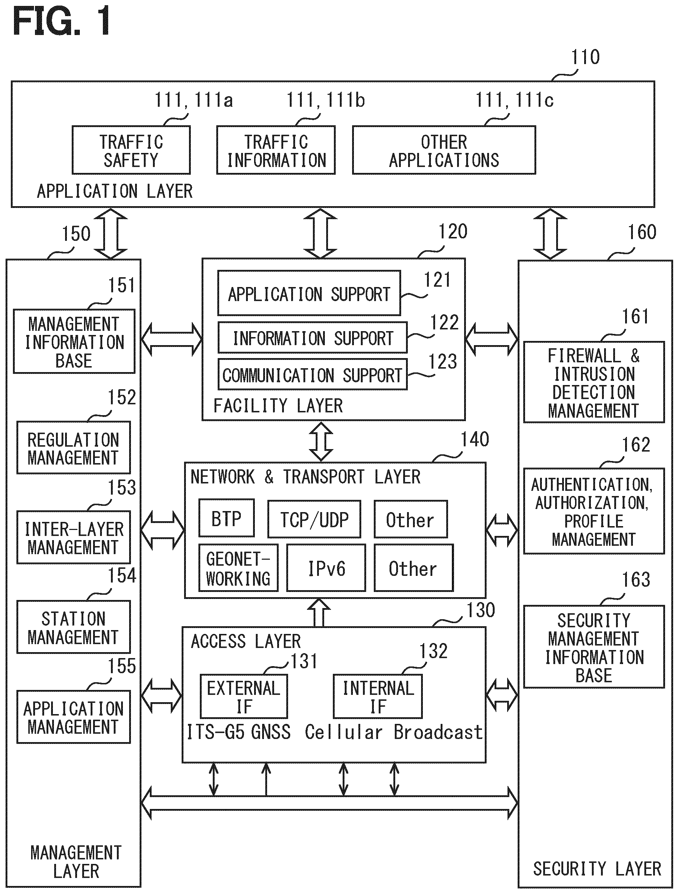

FIG. 1 illustrates an exemplary architecture of the V2X communication device according to one embodiment of the present disclosure. An architecture shown in FIG. 1 is based on a reference architecture of ITS-S according to the EU standard. The architecture shown in FIG. 1 includes an application layer 110, a facility layer 120, a network-and-transport layer 140, an access layer 130, a management layer 150, and a security layer 160.

The application layer 110 implements or supports various applications 111. FIG. 1 shows, as examples of the application 111, a traffic safety application 111a, an efficient traffic information application 111b, and other applications 111c.

The facility layer 120 supports the execution of various use cases defined by the application layer 110. The facility layer 120 may support functions that are the same as or similar to the top three layers (the application layer, the presentation layer, and the session layer) in the OSI reference model. The facility means providing functions, information, and data. The facility layer 120 may provide the function of the V2X communication device. For example, the facility layer 120 may provide the functions of application support 121, information support 122, and communication support 123 shown in FIG. 1.

The application support 121 includes a function for supporting a basic application set or message set. An example of the message is a V2X message. The V2X message can include a periodic message such as a Cooperative Awareness Message (CAM) and an event message such as a Decentralized Environmental Notification Message (DENM). The facility layer 120 may also support the CPM.

The information support 122 has the function of providing common data or database used for a basic application set or message set. One example of the database is the Local Dynamic Map (LDM).

The communication support 123 has a function for providing services for communication and session management. The communications support 123 provides, for example, address modes and session support.

Thus, the facility layer 120 supports a set of applications or a set of messages. That is, the facility layer 120 generates a message set or messages based on the information that the application layer 110 needs to transmit or the services that it needs to provide. The message generated in this may be called a V2X message.

The access layer 130 includes an external IF (Interface) 131 and an internal IF 132, and is capable of transmitting messages/data received in the upper layer via a physical channel. For example, the access layer 130 may provide or support data communications via the following communication technologies. Examples of the communication technologies include communication technology based on the IEEE 802.11 and/or 802.11p standards, ITS-G5 wireless communication technology based on the physical transmission technology of the IEEE 802.11 and/or 802.11p standards, 2G/3G/4G (LTE)/5G wireless mobile communication technology including satellite/broadband wireless mobile communication, wideband terrestrial digital broadcasting technology such as DVB-T/T2/ATC, GNSS communication technology, and WAVE communication technology.

The network-and-transport layer 140 can configure a network for vehicle communication between homogeneous and heterogeneous networks using various transport protocols and network protocols. The transport layer is a connection layer between higher and lower layers. The upper layers include a session layer, a presentation layer, and the application layer 110. The lower layers include the network layer, the data link layer, and the physical layer. The transport layer can ensure that transmitted data arrives at its destination correctly. At the transmission source, the transport layer processes the data into appropriately sized packets for efficient data transmission. At the receiver, the transport layer handles a process of reconstructing the received packets into the original file. The transport protocol may be, for example, TCP (Transmission Control Protocol), UDP (User Datagram Protocol), or BTP (Basic Transport Protocol).

The network layer can manage logical addresses. The network layer may also determine a delivery path of the packets. The network layer may receive packets generated by the transport layer and add the destination logical address to the network layer header. The packet transmission path may be set in consideration of unicast/multicast/broadcast between vehicles, between vehicles and fixed stations, and between fixed stations. As the network protocol, geo-networking, mobility support or IPv6 networking for geo-networking may be considered.

As shown in FIG. 1, the V2X communication device architecture may further include the management layer 150 and the security layer 160. The management layer 150 manages the data transfer and interaction between the layers. The management layer 150 includes a management information base 151, a regulation management 152, an inter-layer management 153, a station management 154, and an application management 155. The security layer 160 manages the security of all layers. The security layer 160 includes firewall and intrusion detection management 161, authentication, authorization and profile management 162, and a security management information base 163.

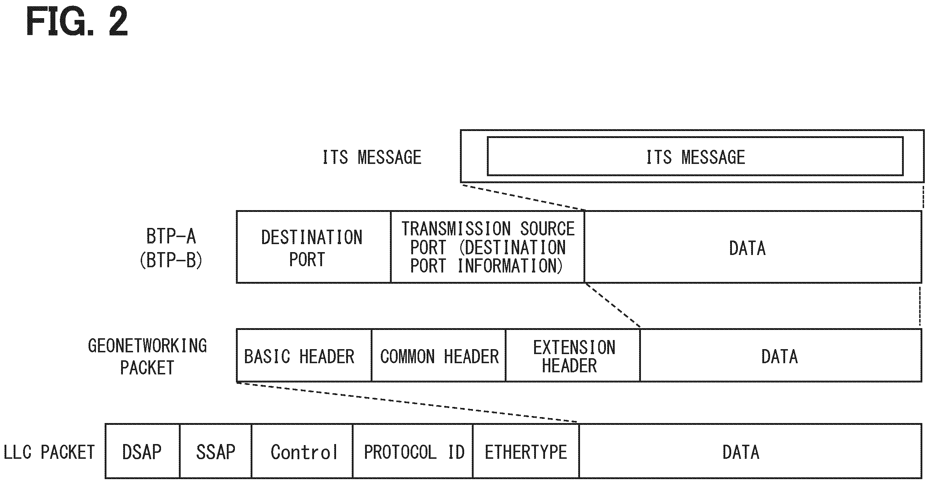

FIG. 2 illustrates an example of the V2X message. The V2X message may also be referred to as an ITS message. The V2X messages can be generated at the application layer 110 or the facility layer 120. Specific examples of the V2X message are CAM, DENM, and CPM.

The transport layer in the network-and-transport layer 140 generates the BTP packet. The network layer in the network-and-transport layer 140 can encapsulate the BTP packet to generate a GeoNetworking packet. The GeoNetworking packet is encapsulated in a LLC (Logical Link Control) packet. In FIG. 2, the data may include a message set. The message set is, for example, basic safety messages.

The BTP is a protocol for transmitting the V2X message generated in the facility layer 120 to the lower layer. There are two types of BTP headers of A type and B type. The A type BTP header can include a destination port and transmission source port required for transmission in bidirectional packet transmission. The B type BTP header can include a destination port and destination port information required for transmission in non-bidirectional packet transmission.

The fields contained in the BTP header are described below. The destination port identifies the facility entity that corresponds to the destination of the data contained in the BTP packet (BTP-PDU). The BTP-PDU is a unit of transmission data in the BTP.

The transmission source port is a field that is generated in the case of the BTP-A type. The transmission source port indicates the port of the protocol entity in facility layer 120 at the transmission source of the corresponding packet. This field can have a size of 16 bits.

The destination port information is a field that is generated in the case of the BTP-B type. Additional information is provided when the destination port is a well-known port. This field can have a size of 16 bits.

The GeoNetworking packet includes a basic header and a common header according to a network layer protocol, and optionally includes an extension header according to a GeoNetworking mode. The GeoNetworking header will be described later.

The LLC packet is obtained by adding a LLC header to the GeoNetworking packet. The LLC header provides a function for distinguishing and transmitting IP data and GeoNetworking data. The IP data and GeoNetworking data can be distinguished by a SNAP (Subnetwork Access Protocol) Ethertype.

When IP data is transmitted, the Ethertype may be set to x86DD and included in the LLC header. When the GeoNetworking data is transmitted, the Ethertype may be set to 0x86DC and included in the LLC header. The receiver can check the Ethertype field in the LLC packet header and, depending on the value of the Ethertype field in the LLC packet header, forward and process the packet to the IP data path or the GeoNetworking path.

The LLC header includes a Destination Service Access Point (DSAP) and a Source Service Access Point (SSAP). In the LLC header, the SSAP is followed by a control field (Control in FIG. 2), a protocol ID, and an Ethertype.

The V2X communication device may provide various services for road safety and traffic efficiency. One of the services may be a Cooperative Awareness (CA) service. The CA in road traffic means that road users and roadside infrastructure can know each other's position, movements and attributes. The road users are all users on and in the periphery of the road who are involved in road safety and control, such as users using cars, trucks, motorbikes, bicycles, and pedestrians, while roadside infrastructure refers to equipment such as road signs, traffic lights, barriers, and entrances. Among these, pedestrians, people using wheelchairs and the like can be considered vulnerable road users.

Mutual recognition is fundamental for applications such as road safety and traffic efficiency. The mutual recognition can be achieved by regular information exchange between road users, such as vehicle-to-vehicle (V2V), vehicle-to-infrastructure (V2I), infrastructure-to-vehicle (12V), and object-to-object (X2X), based on wireless networks called V2X networks.

Cooperative safety traveling and traffic efficiency applications require improved situational recognition, including the presence and behavior of road users in the periphery of the V2X communication device. For example, the V2X communication device may provide situational recognition through its own sensors and communication with other V2X communication devices. In this case, the CA service can specify how the V2X communication device should communicate its position, behavior, and attributes by transmitting CAM.

In this way, the CA service enables V2X communication devices to periodically provide their own location and status to the peripheral V2X communication devices. Thereby, it is possible to support traffic safety. However, the CA service has the limitation that only information about the corresponding V2X communication device itself can be shared. To overcome this limitation, service development such as CPS 124 is necessary.

### (CPS and CPM)

The CPS 124 may specify how the V2X communication device may inform other V2X communication devices about the position, behavior, and attributes of detected peripheral road users and other objects. For example, the CPS 124 may share information contained in the CPM with other V2X communication devices by transmitting the CPM. It should be noted that the CPS 124 may be a function that can be added to all types of object information communication devices participating in road traffic.

The CPM is a message exchanged between V2X communication devices over the V2X network. The CPM can be used to generate an aggregate perception of road users and other objects detected and/or recognized by the V2X communication devices. The recognized road users or objects may be, but are not limited to, road users or objects that are not equipped with V2X communication devices.

As described above, the V2X communication device that shares information via the CAM shares only information regarding its own recognition state with other V2X communication devices in order to perform cooperative recognition. In this case, road users that are not equipped with V2X communication devices are not part of the system. Therefore, their view of the situation related to safety and traffic management is limited.

One considered way to improve this is a system that is equipped with the V2X communication device and can recognize the road user and object that are not equipped with the V2X communication device, and the system notifies other V2X communication devices of the presence and status of the road user and the object that are not equipped with the V2X communication device. In this way, the CPS 124 cooperates to recognize the presence of the road user and the object that are not equipped with the V2X communication device. Therefore, it is possible to easily improve the safety and traffic management performance of the system equipped with V2X communication device.

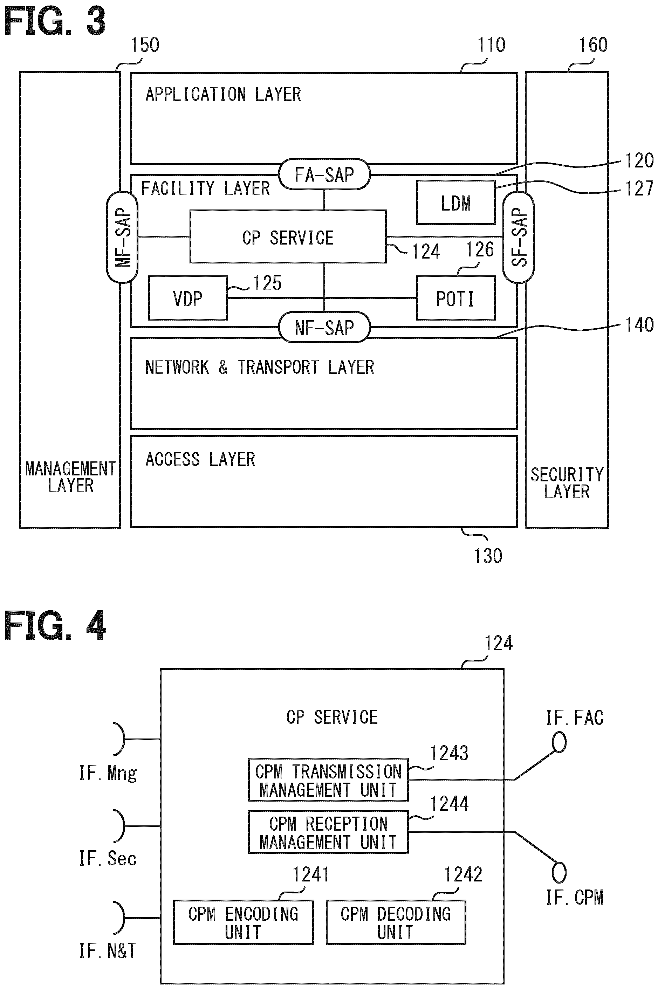

As shown in FIG. 3, the CPS 124 may be an entity in the facility layer 120 that operates the CPM protocol. For example, the CPS 124 may be part of the application support domain of the facility layer 120.

The CPS 124 may, for example, provide two services: transmitting and receiving the CPM. The CPS 124 may fundamentally differ from a CA service in that it may not receive input data regarding the host V2X communications device, for example, from a Vehicle Data Provider (VDP) 125 or a position and time (POTI) unit 126.

Transmitting the CPM includes generating and transmitting the CPM. In the process of generating the CPM, the transmitting V2X communication device generates the CPM, and transmits the network-and-transport layer 140 for transmission. The transmitting V2X communication device may be referred to as an originating V2X communication device, a host V2X communication device, and the like.

The CPS 124 may interface with other entities in the facility layer 120 and V2X applications in facility layer 120 to collect relevant information for CPM generation and to distribute received CPM content for further processing. In the V2X communication device, the entity for data collection may be the function providing object detection in the host object detector.

Additionally, to distribute (or transmit) the CPM, the CPS 124 may use services provided by protocol entities in the network-and-transport layer 140. For example, the CPS 124 may connect to the network-and-transport layer 140 through the NF-SAP to exchange CPMs with other V2X communication devices. The NF-SAP is a service access point between the network-and-transport layer 140 and the facility layer 120.

Additionally, the CPS 124 may interface with secure entities through SF-SAP, which is an SAP between security layer 160 and facility layer 120, to access security services for CPM transmission and CPM reception. The CPS 124 may also interface with management entities through MF-SAP, which is an SAP between the management layer 150 and the facility layer 120. Further, when the CPS 124 directly provides the received CPM data to an application, the CPS 124 may be connected to the application layer 110 via a FA-SAP, which is a SAP between the facility layer 120 and the application layer 110.

The delivery of CPM may vary depending on the applied communication system. For example, in an ITS-G5 network as defined in ETSI EN 302 663, a CPM may be transmitted from the originating V2X communication device to all V2X communication devices within a direct communication range. The communication range can be particularly affected by the originating V2X communication device by varying its transmission power depending on the involved region.

Additionally, the CPM may be generated periodically with a frequency controlled by the CPS 124 at the originating V2X communication device. The generation frequency may be determined taking into consideration the wireless channel load determined by distributed congestion control. The generation frequency may also be determined taking into account the state of the detected non-V2X object, for example, dynamic behavior of position, speed or direction, and the transmission of CPM for the same perceived object by other V2X communication devices.

Additionally, when the receiving V2X communication device receives the CPM, the CPS 124 makes the contents of the CPM available for use by functions within the receiving V2X communication device, such as the V2X application and/or a LDM 127. For example, the LDM 127 may be updated with received CPM data. The V2X application may retrieve this information from the LDM 127 for further processing.

As shown in FIG. 4, the CPS 124 can provide the following sub-functions for CPM transmission and reception. A CPM encoder 1241 composes or generates the CPM according to a predefined format. Up-to-date in-vehicle data may be included in the CPM. A CPM decoder 1242 decodes the received CPM. A CPM transmission management unit 1243 executes the protocol operations of the transmitting V2X communication device. Operations performed by the CPM transmission management unit 1243 may include initiating and terminating CPM transmission operations, determining the CPM generation frequency, and triggering CPM generation. A CPM reception management unit 1244 can perform protocol operations of the receiving V2X communication device. Specifically, this operation may include triggering the CPM decoding function upon CPM reception, providing the received CPM data to LDM 127 or a V2X application of the receiving V2X communication device, checking the information of the received CPM, and the like.

The Modulation and Coding Scheme (MCS) in CPM affects the resulting channel usage. In scenarios where large packets are required, using a high MCS increases bandwidth efficiency and reduces channel congestion. For example, the modulation scheme may be QAM 16 or higher.

Next, the distribution of CPM will be described in detail. Specifically, the requirements for CPM distribution, the start and end of the CPS 124, the CPM trigger conditions, the CPM generation cycle, constraint conditions, and the like will be described. Point-to-multipoint communications as defined in ETSI EN 302 663 may be used for CPM distribution. For example, when ITS-G5 is used to distribute CPM, a control channel (G5-CCH) may be used. The CPM generation may be triggered and managed by the CPS 124 while the CPS 124 is operational. The CPS 124 may be activated when the V2X communication device is activated and may end when the V2X communication device ends.

The host V2X communication device may transmit the CPM whenever at least one object is detected with sufficient confidence that it needs to be exchanged with a nearby V2X communication device. With regard to including the detected object, the CPS should consider a trade-off between object lifetime and channel utilization rate. For example, from the perspective of the applications that utilize the information received by the CPM, there is a need to provide updated information as frequently as possible. However, from the viewpoint of the ITS-G5 stack, a low transmission period is required since the channel utilization rate be required to be minimized. Therefore, it is desirable for the V2X communication device to take this into consideration and appropriately include the detected object and object information in the CPM. The transmission period (also called T_GenCpm) may be limited to a range greater than 100 ms and less than 1000 ms. The transmission period may be dynamically changed, in which case the transmission period may also be referred to as a transmission interval. Also, in order to reduce the message size, it is necessary to evaluate the object before transmitting it.

### (Structure of CPM)

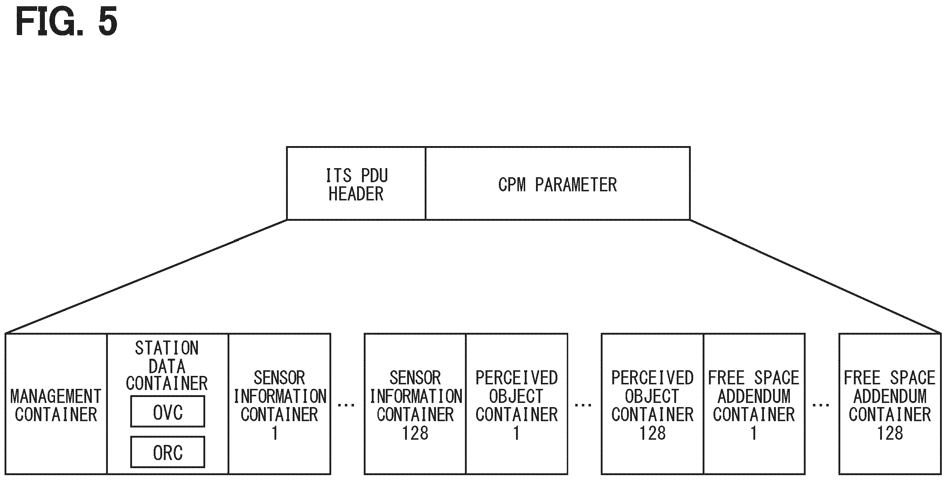

FIG. 5 shows the structure of the CPM. As described above, the CPM may be a message exchanged between V2X transmission devices in the V2X network. The CPM may also be used to generate an aggregate perception of road users and/or other objects detected and/or perceived by the V2X communication devices. That is, the CPM may be an ITS message for generating a collective perception of objects detected by the V2X communication devices.

The CPM may include status and attribute information of road users and objects detected by the transmitting V2X communication device. The content may vary depending on the type of detected road user or detected object and the detection performance of the transmitting V2X communication device. For example, when the object is a vehicle, the state information may include at least information regarding actual time, position, and motion state. The attribute information may include attributes such as dimension, vehicle type, role in road traffic, etc.

The CPM may complement the CAM and function similarly to the CAM. That is, it may be to enhance cooperative awareness. The CPM may contain externally observable information about detected road users or objects. The CPS 124 may include a method for reducing duplication or overlap of CPMs transmitted by different V2X communication devices by validating the CPMs transmitted by other stations.

By receiving the CPM, the receiving V2X communication device may recognize the presence, type and status of road users or objects detected by the originating V2X communication device. The received information may be used by the receiving V2X communication device to support V2X applications to enhance safety and improve traffic efficiency and travel times. For example, by comparing the received information with the state of a detected road user or object, the receiving V2X communication device can estimate the risk of a collision with the road user or object. Additionally, the receiving V2X communication device may notify the user via its human machine interface (HMI) or may automatically take corrective action.

The general format of the CPM will be described with reference to FIG. 5. This format may be presented as ASN (Abstract Syntax Notation).1. Data elements (DE) and data frames (DF) not defined in this disclosure may be derived from the Common Data Dictionary defined in ETSI TS 102 894-2. As shown in FIG. 5, the CPM may include a common ITS protocol unit header/ITS packet data unit (hereinafter ITS PDU header) and multiple containers.

The ITS PDU header is a header that contains information about the protocol version, message type, and the ITS ID of the originating V2 communication device. The ITS PDU header is a common header used in ITS messages and is located at the start of the ITS message. The ITS PDU header may be called the common header.

The multiple containers may include a management container, a station data container, a sensor Information container, a perceived object container, and a free space addendum container.

The sensor information container may be called a field-of-view container. The field of view information container may be referred to as FOC. The perceived object container may be referred to as POC. The CPM includes a management container as an essential container, and may include a station data container, a sensor information container, a perceived object container, and a free space addendum container as optional containers. The sensor information container, the perceived object container and the free space addendum container may be multiple containers. The upper limit values of the sensor information container, the perceived object container, and the free space addendum container that can be included in one CPM message may be set in common or individually. The upper limit of the number of containers may be, for example, 128.

Hereinafter, each container will be described below. In the following, the DF represents data frame and DE represents the data element. Each container includes a sequence of optional or mandatory DEs and/or DFs.

The management container provides basic information about the originating ITS-S, whether it is a vehicle or a roadside unit type station. Further, the management container may also include information about the station type, the reference position, and optionally the current message segment. The station type indicates the type of ITS-S. The reference position is the position of the originating ITS-S. The information on the message segment describes division information when the CPM is divided into multiple messages due to message size restrictions.

The station data container provides more specific information about the originating ITS-S in addition to the common information provided by the management container. The station data container includes an originating vehicle container (hereinafter referred to as OVC) when the originating ITS-S is a vehicle. The OVC may contain overlapping information with the CAM. The ITS-S that receives the CPM from a source also receives the CAM from the same source. Additionally, the OVC may include additional parameters not provided by the CAM. The additional optional parameters may include at least one of vehicle heading angle, pitch angle, roll angle, vehicle height, or trailer data.

When the originating ITS-S is an RSU, it contains an originating RSU container. The source RSU container contains an ID for the road or intersection on which the RSU resides. The source RSU container may include an optional parameter to reference the road infrastructure provided by the road lane topology service.

The sensor information container lists information about the individual sensors mounted on the vehicle or RSU to detect peripheral objects. When the V2X communication device is equipped with multiple sensors, multiple sensor information containers may be added. Every sensor listed in the sensor information container is given a temporary ID (sensor ID) that is used in turn in the perceived object container to associate perceived object information with a particular sensor.

The DF of each sensor information may include a sensor type indicating the type of the sensor system. This may be a specific sensor type that fuses object information fused from multiple sensors. The ITS-S can be provided with different types of sensors, such as radar, LiDAR and multi-sensor fusion systems. Therefore, the sensor information container offers different possibilities for describing the properties of a sensor system.

Sensors mounted on a moving station such as a vehicle are described using the vehicle sensor description DF. Stationary sensors attached to the RSU are described using a stationary sensor variant DF. Thus, the descriptions of the two sensor types may be different. Both sensor types can be used to describe the detection performance of the ITS-S. This may be an actual parameter of the perception system. The actual parameter may for example be the actual perception range or the applicable perception region of the perception system, in other words, the region in which the object is detected by the perception system.

The sensor type indicates the type of the sensor. The types of sensors are listed below. The numbers in parentheses are flags corresponding to the type. For example, sensor types are: undefined (0), radar (1), LiDAR (2), mono video (3), stereo vision (4), night vision (5), ultrasonic (6), pmd (7), fusion (8), induction loop (9), spherical camera (10), and collection of these (11). The pmd stands for photo mixing device. The spherical camera is also called a 360-degree camera.

The perceived object container is used to describe objects perceived by sensors associated with the originating V2X communication device. The perceived object container can be added for every object perceived by the ITS-S. The perceived object container can also provide classification and location matching for road data.

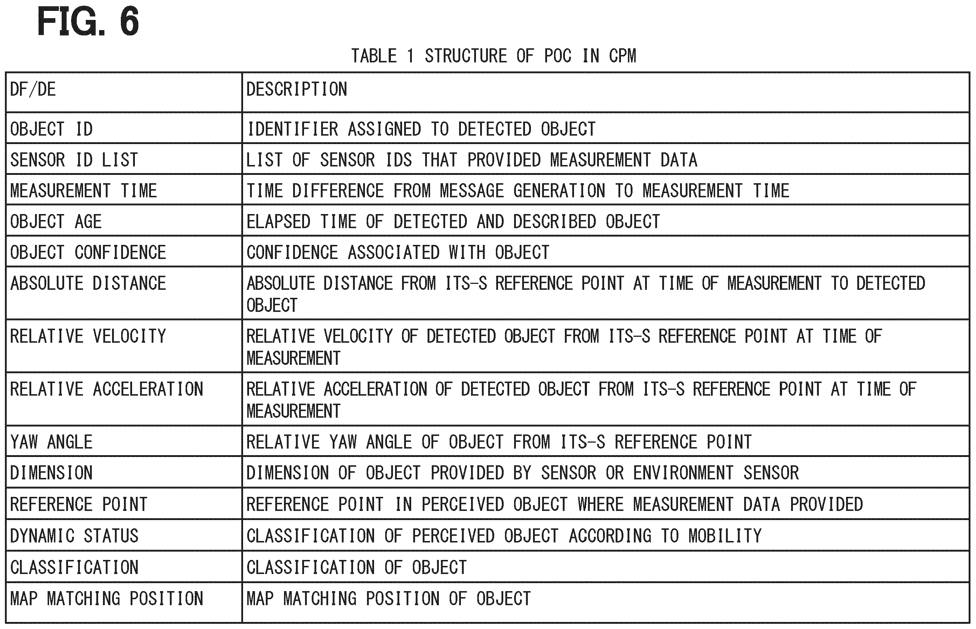

A table 1 shown in FIG. 6 is an example of the configuration of a perceived object container in CPM. The DF and DE defined in the perceived object container will be described with reference to the table 1.

An object ID shown in the table 1 is an identifier assigned to the detected object. The object ID remains constant as long as the object is perceived by the distributed ITS-S.

A sensor ID list is a list of the sensor IDs that provided the measurement data. This list references the sensor IDs in the sensor information container.

A measurement time provides the time difference from a generation delta time of the message to the measurement time. A negative value indicates that the specified object state refers to a time after the resulting delta time has been calculated, i.e., after the most recent ITS-S position update used to calculate the resulting delta time.

An object age provides the age of the object that was detected and described.

Object confidence is the confidence associated with the object. The object confidence indicates the confidence of the object presence and its characteristics. The object confidence value may be expressed as a percentage value between 1 and 100. When 0 is stored as the object confidence value, this may indicate that the confidence of the object is unknown. When the object confidence value is stored as 101, this may indicate that the confidence cannot be calculated and the required confidence level defined by the corresponding standard applying the DE is not applicable.

The absolute distance is the absolute distance from the reference point of the ITS-S to the detected object at the time of measurement. The absolute distance may be provided by three DFs: x distance, y distance, and z distance. The x distance is the absolute distance in the x direction from the reference point of the ITS-S to the detected object at the time of measurement. The y distance is the absolute distance in the y direction from the reference point of the ITS-S to the detected object at the time of measurement. The z distance is the absolute distance in the z direction from the reference point of the ITS-S to the detected object at the time of measurement. When the ITS-S is a vehicle, the x, y and z directions follow the coordinate system specified in ISO 8855. When the ITS-S is an RSU, a coordinate system is adopted in which y indicates the north direction, x indicates the east direction, and z indicates the vertical direction.

The relative velocity is the relative velocity of the detected object from the reference point of the ITS-S at the time of measurement. The relative velocity may be provided by three DFs: x velocity, y velocity and z velocity. The x velocity is the relative velocity of the detected object in the x direction from the reference point of the ITS-S at the time of measurement. The y velocity is the relative velocity of the detected object in the y direction from the reference point of the ITS-S at the time of measurement. The z velocity is the relative velocity in the z direction of the detected object from the reference point of the ITS-S at the time of measurement.

The relative acceleration is the relative velocity of the detected object from the reference point of the ITS-S at the time of measurement. The relative acceleration may be provided by three DFs: x acceleration, y acceleration, and z acceleration. The x acceleration is the relative acceleration in the x direction of the detected object from the reference point of the ITS-S at the time of measurement. The y acceleration is the relative acceleration in the y direction of the detected object from the reference point of the ITS-S at the time of measurement. The z acceleration is the relative acceleration in the z direction of the detected object from the reference point of the ITS-S at the time of measurement.

The yaw angle is the relative yaw angle of the object from the reference point of the ITS-S. When the ITS-S is a vehicle, the yaw angle corresponds to the x-direction of the vehicle in the coordinate system specified in ISO 8855. In a case of the RSU, in a coordinate system where y is north, x is east, and z is vertical, the yaw angle is measured as a positive value that takes into account the direction of the object rotating counterclockwise from the x direction. The confidence in the yaw angle may be described with a predefined 95% confidence level for the component.

The dimension is the dimension of the object provided by the sensor or the environment model. The dimension may be provided by three DFs: a first planar dimension, a second planar dimension, and a vertical dimension. The first planar dimension is the first dimension of the object provided by the sensor or the environment model. The first planar dimension is always contained in a plane that is perpendicular to the direction of the angle indicated by the yaw angle and that contains the reference point of the object. The second planar dimension is the second dimension of the object provided by the sensor or the environment model. The second planar dimension is always contained in a plane that contains the yaw angle and the direction of the angle indicated by the reference point of the object. The vertical dimension is the vertical dimension of the object provided by the sensor or the environment model. The dimensions may be described for components with a predefined 95% confidence level. The dimension **DF** may store the object dimension value, which can be estimated as the mean of the current distribution, and the dimension accuracy associated with the specified value.

The reference point is a reference point on the perceived object for which measurement data is provided. When the reference point of the object cannot be identified, the reference point is regarded as the center point of the detected object. The reference point is included in a plane perpendicular to the direction of the yaw angle.

Dynamic status is a classification of the perceived object according to their movement capabilities. The dynamic status indicates whether the detected object is classified as a dynamic target. When this value is stored as 0, the dynamic status indicates that the object is generally moving. When this value is stored as 1, the dynamic status indicates that the object was previously dynamic. When the value is stored as 2, the overall status indicates that the object has not moved during the past observation.

The classification provides a classification of the described object. A multidimensional classification may be provided along with the confidence level. The classification is performed with a certain degree of confidence. The classification **DF** may include classes that best describe the detected objects. Each class may provide optional subclasses and a confidence level associated with the subclass.

The objects may be classified into five categories: unknown, vehicle, human, animal and other. That is, the class must be set to one of vehicle, human, animal, and others. For vehicles, the following subclass types may be described: Unknown (0), Moped (1), Motorcycle (2), Car (3), Bus (4), Light Truck (5), Heavy Truck (6), Trailer (7), Special Vehicle (8), Tram (9), Emergency Vehicle (10), Agricultural Vehicle (11). The number in parentheses here is a flag value stored as a subclass value.

For humans, the following subclass types may be described: unknown (0), pedestrian (1), human using a wheelchair (2), cyclist (3), human walking or pulling a stroller (4), human skating or other means of transportation (5), and group of humans (6). The number in parentheses here is a flag value stored as the subclass value.

A map matching position is an optionally provided map matching position of the object. The map matching position may be the position of the object on the LDM. The DF of the map matching position may provide a lane ID and longitudinal lane position indicating the lane on the road in which the object is located.

The free space addendum container is a container that indicates information about the free space recognized by the transmitting V2X communication device (i.e., free space information). The free space is an area that is not considered to be occupied by road users or obstacles, and can also be described as vacant space. The free space can also be described as a space in which a mobile object moving together with the transmitting V2X communication device can move.

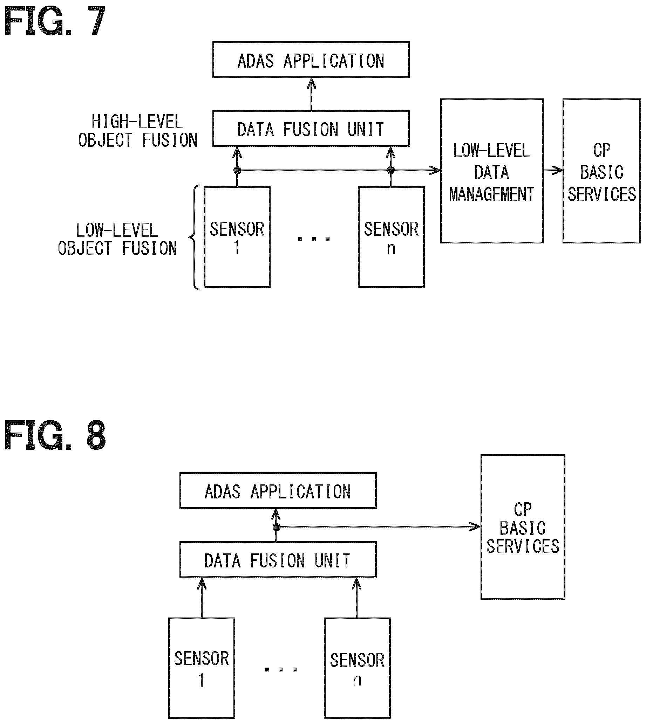

In FIGS. 7 and 8, sensor data extraction by the V2X communication device providing the CPS 124 is conceptually shown. More specifically, FIG. 7 illustrates how the V2X communication device extracts sensor data at a low level. FIG. 8 shows how the V2X communication device extracts sensor data at a high level.

The source of the sensor data transmitted as part of the CPM needs to be selected according to the requirements of the future data fusion process in the receiving V2X communication device. In general, the transmitted data should be as close as possible to the original sensor data. However, it is not realistic to simply transmit the original sensor data, for example, the raw data. This is because it places very high demands on data rate and transmission period.

FIGS. 7 and 8 show possible embodiments for selecting the data to be transmitted as part of the CPM. In the embodiment of FIG. 7, sensor data is acquired from different sensors and processed as part of a low level data management entity. This entity can select the object data to be inserted as part of the next CPM and can also calculate the validity of detected objects. In FIG. 7, the amount of data transmitted over the V2X network increases because data from each sensor is transmitted. However, the sensor information can be efficiently utilized by the receiving V2X communication device.

In the embodiment of FIG. 8, sensor data or object data provided by a data fusion unit specific to the V2X communication device manufacturer is transmitted as a part of the CPM.

In FIG. 8, since integrated sensor data collected together via the data fusion unit is transmitted, there is an advantage that the amount of data transmitted via the V2X network is small. However, there is a disadvantage in that it depends on the collection method of the V2X communication device for collecting sensor information. Also, different manufacturers may implement the different data fusion process.

### (System Configuration Example)

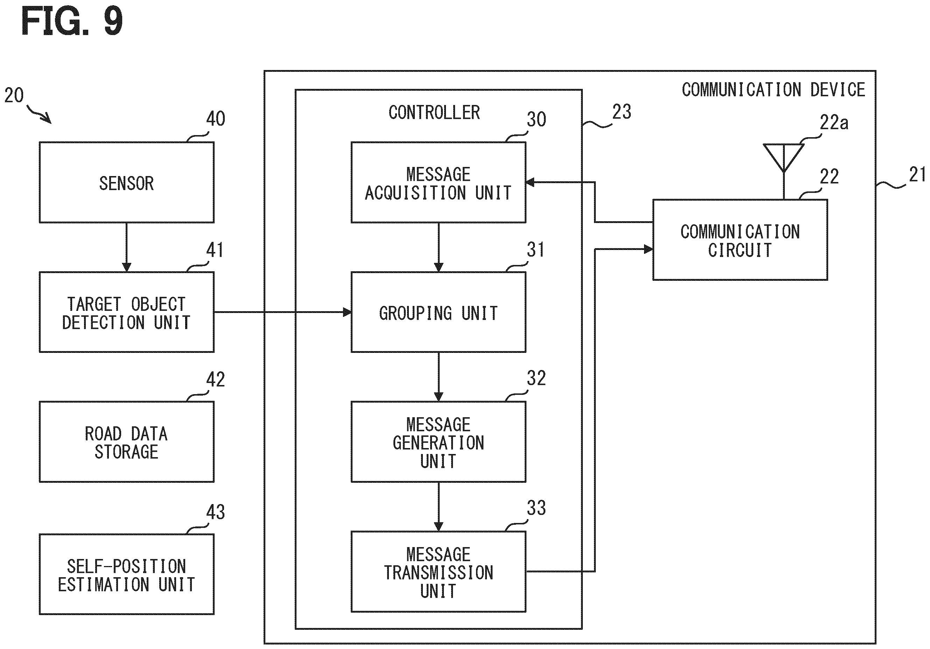

An example of the configuration of a system 20 for implementing ITS-S is shown in FIG. 9. The system 20 may be an in-vehicle system or a roadside system. A communication device 21 included in the system 20 has, in addition to the functions and configurations of the communication device such as the V2X communication device described above, functions and configurations described below.

The system 20 includes a sensor 40, an object detection unit 41, a road data storage 42, and the communication device 21. When the system 20 is an in-vehicle system, the system 20 may further include a self-position estimation unit 43. The sensor 40 is provided for detecting and sensing objects. When the system 20 is an in-vehicle system, the sensor 40 is mounted on the vehicle. Multiple sensors 40 may be provided in one vehicle. When the system 20 is a roadside system, one or more sensors 40 are provided, fixed to a road, a building, a pole, or the like. The sensor 40 may be a camera, millimeter wave radar, sonar, LiDAR, and the like.

The objects can include dynamic and static objects. The dynamic objects include, for example, four-wheeled vehicles, two-wheeled vehicles such as motorcycles, pedestrians, and animals. The static objects include, for example, pylons, warning triangles, utility poles, and falling objects.

The object detection unit 41 acquires a signal including sensor data information from the sensor 40 and detects various objects present around the sensor 40. The object detection unit 41 may be implemented by a dedicated computer. The dedicated computer has at least one memory and at least one processor. The memory is a non-transitional substantive storage medium that non-temporarily stores data and programs which can be read by a computer or a processor. Further, for example, a rewritable volatile storage medium such as a random access memory (RAM) may be provided as the memory.

Information on the object detected and perceived by the sensor 40 and the object detection unit 41 is provided to the communication device 21 in association with information necessary for generating the CPM, i.e., information such as the sensor **ID** contained in the sensor information container. The object detection unit 41 may be included in the sensor 40 itself as a component of the sensor 40.

The road data storage 42 stores and holds road map data. The road data storage 42 may be implemented by a database equipped with a storage medium. The road map data is data that represents the shape of roads. The road map data may include high accuracy map data. The road map data may include data for the LDM. The road map data may be data that allows distinction of road lanes. The road map data may be updated by update map data distributed from a road map distribution center.

The self-position estimation unit 43 estimates the self-position of the vehicle in which the system 20 is mounted. For example, the self-position estimation unit 43 includes a GNSS receiver that receives navigation signals transmitted by navigation satellites included in Global Navigation Satellite Systems (GNSS). The self-position estimation unit 43 successively estimates the current self-position based on the navigation signal received by the GNSS receiver. The current self-position is expressed in coordinates including latitude and longitude. The coordinates may also include altitude. The current self-position may be used, for example, to identify the reference point of the ITS-S mentioned above.

The communication device 21 is capable of wireless communication with a different communication device. The different communication device may be another ITS-S, or may be the V2X communication device mounted on the other ITS-S. The different communication device may be the V2X communication device mounted on another vehicle, or may be the V2X communication device mounted on the RSU.

The communication device 21 may be implemented by a short range communications (DSRC) communication device, a cellular V2X (C-V2X) communication device, or the like. The communication device 21 includes a communication circuit 22 and a controller 23.

The communication circuit 22 includes a modulation circuit, a demodulation circuit, an amplifier circuit, and the like. The communication circuit 22 modulates and amplifies a message provided by the controller 23 and transmits the message from an antenna 22a. In addition, the communication circuit 22 demodulates and amplifies a message received via the antenna 22a and provides the message to the controller 23. The frequency used for communication may be, for example, the 5 GHz band or the 700 MHz band. When the communication device 21 is the V2X communication device, the communication performed by the communication device 21 is V2X communication.

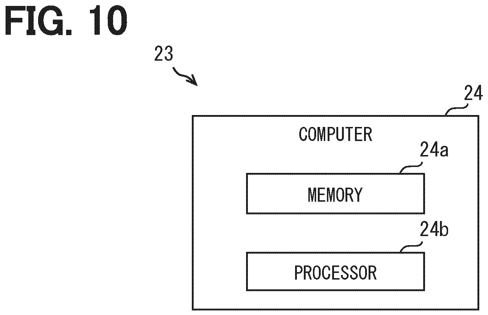

The controller 23 controls the communication device 21. As shown in FIG. 10, the controller 23 may be implemented by a dedicated computer 24. The dedicated computer 24 constituting the controller 23 has at least one memory 24a and at least one processor 24b. The memory 24a may be at least one type of non-transitory tangible storage medium, such as a semiconductor memory, a magnetic medium, an optical medium, and the like, which non-temporarily stores a program, data, and the like that can be read by the processor 24b. Furthermore, for example, a rewritable volatile storage medium such as a random access memory (RAM) may be provided as the memory 24a. The processor 24b includes, for example, at least one type of a central processing unit (CPU), a graphics processing unit (GPU), and a reduced instruction set computer (RISC)-CPU as a core.

The controller 23 includes a message acquisition unit 30, a grouping unit 31, a message generation unit 32, and a message transmission unit 33 as functional blocks implemented by the processor 24b that executes a program.

The message acquisition unit 30 acquires messages transmitted by other communication devices via the antenna 22a and the communication circuit 22. Messages transmitted by other communication devices include CAM, CPM, DENM, and so on. The CPM may include at least one of information on objects perceived by sensors mounted on a vehicle or RSU equipped with another communication device, and information on perceived objects that the vehicle or RSU further obtains from another vehicle or RSU.

When the communication device 21 is mounted on a vehicle, the message acquired by the message acquisition unit 30 may be provided to other systems in the same vehicle through an in-vehicle network. The in-vehicle network may be, for example, Ethernet, Controller Area Network (CAN), Local Interconnect Network (LIN), Clock Extension Peripheral Interface (CXPI), FlexRay, or Media Oriented Systems Transport (MOST). Ethernet, CAN, CXPI, FlexRay and MOST are registered trademarks. Further, the message acquired by the message acquisition unit 30 is provided to the grouping unit 31.

The grouping unit 31 determines whether to group multiple objects based on at least one of the object information provided by the message acquisition unit 30 and the object information provided by the object detection unit 41. This determination may include determining an assignment for a number of objects to one or more groups. The object group generated by grouping may include two or more arbitrary objects. Based on the constraints of the message format, a maximum number of objects that can be included in one object group generated by grouping may be set.

The multiple objects referred to here are multiple objects detected by the sensor. The multiple objects perceived by the sensor may include objects perceived by the sensor 40 included in the system 20. The multiple objects perceived by the sensor may include objects perceived by a sensor that is not provided in the system 20 belonging to the communication device 21, but is mounted on the vehicle or RSU in which the communication device 21 is mounted, and is capable of acquiring sensor data via a network. The multiple objects perceived by the sensor may also include objects perceived by a sensor mounted on the vehicle or RSU equipped with another communication device, and information about the objects may be provided by a message received from the other communication device.

The grouping unit 31 may perform grouping based on a grouping condition defined in advance. The grouping conditions may be commonly used among the ITS-S that transmit and receive the CPM. The multiple grouping conditions may be defined. In this case, the grouping unit 31 may select a grouping condition to be adopted from among multiple grouping conditions depending on the road environment, communication congestion status, and the like. The grouping condition may be referred to as an aggregation condition of the detected objects, or simply as an aggregation condition. Further, the grouping conditions may be regarded as a type of redundancy mitigation rules for reducing the message size of the CPM.

One grouping condition may be one of multiple conditions described below. On the other hand, one grouping condition may be a composite combination of multiple conditions described below. In the following, making something a target for grouping includes making it a candidate for grouping, and may also include excluding it from the final grouping in combination with other conditions.

The grouping conditions may include conditions related to the positions of the objects. For example, the grouping unit 31 may group two objects when the absolute distance between the two objects is equal to or less than a predetermined distance. The grouping unit 31 may exclude two objects from being grouped when the absolute distance between the two objects is greater than the predetermined distance.

Here, the absolute distance may be calculated by referring to at least one of the information on the distance of the object provided by the object detection unit 41 and the absolute distance of the detected object container in the CPM received from another communication device. The value of the predetermined distance may be a uniquely defined value. The value of the specified distance may also be changed depending on the road conditions, communication congestion, and the like. On the other hand, the grouping conditions do not necessarily have to include conditions related to the object positions.

The grouping conditions may include conditions related to the type of object. The type of object may be a class or subclass in the CPM classification. For example, the grouping unit 31 may group multiple objects of the same type. The grouping unit 31 may exclude multiple objects of different types from the grouped targets. The multiple objects having the same class but different subclasses may be grouped together. The multiple objects that belong to the same class but different subclasses may be excluded from the grouped target. On the other hand, the grouping conditions do not necessarily have to include a condition related to the type of object.

The condition related to the object position and the condition related to the object type may be applied in combination. For example, the grouping unit 31 may group two objects when the absolute distance between the two objects is equal to or less than a predetermined distance and the two objects are of the same type. Even when the absolute distance between two objects is equal to or less than a predetermined distance and the two objects are of different types, the grouping unit 31 may exclude the two objects from the grouped target. The specified distance here is a preset threshold value, and a common value may be used between the vehicles and RSUs performing V2X communication. The predetermined distance may be a different value depending on the object type (eg, class, subclass) of the grouped target. For example, when the grouped object is a pedestrian, a first distance may be used as the predetermined distance, and when the object is a vehicle, a second distance may be used as the predetermined distance. The second distance may be less than the first distance. The second distance may be greater than the first distance.

The grouping condition may include conditions regarding the identity of the sensors. For example, the grouping unit 31 may group multiple objects perceived by the same sensor. The grouping unit 31 may exclude the objects perceived by different sensors from the grouped target. The determination of whether the sensors are the same may be performed by referring to the sensor **ID** in the sensor information container of the CPM. For example, when two cameras with the same model number (or specifications) are mounted on a vehicle, the two cameras may be treated as different sensors. In other words, only multiple objects perceived by one of the two cameras may be subject to grouping.

Further, the grouping unit 31 may group multiple objects perceived by the same type of sensor. The grouping unit 31 may exclude objects perceived by different types of sensors from the grouped target. The determination of whether the sensor types are the same may be performed by referring to the sensor type in the sensor information container of the CPM.

Further, the grouping unit 31 may group multiple objects of the same type that are perceived by the same sensor. On the other hand, the grouping condition does not necessarily have to include a condition regarding the identity of the sensors.

The grouping condition may include conditions regarding the behavior of the object. The condition regarding the behavior of the object may be a condition regarding similarity of the behavior. The similarity of behavior may be determined based on the object dynamic status, direction of movement, directional instability, speed, acceleration, and combinations thereof.

For example, similarity in behavior may be recognized for multiple objects whose speeds fall within a predefined common speed range and whose moving directions fall within a predefined common angle range. When the common speed range is a range indicating a small speed including a speed of 0, the movement direction does not need to be included in the parameters for determining the similarity of behavior.

The grouping unit 31 may group multiple objects that are recognized to have similar behaviors. The grouping unit 31 may exclude multiple objects whose behaviors are not recognized to have similarity or whose behaviors are recognized to have difference from the grouped target.

Here, a further concrete example of grouping using behavioral similarity will be exemplified. For example, in densely populated urban areas, when a pedestrian crossing changes from a stop signal (e.g., red light) to a proceed signal (e.g., green light), a large number of pedestrians start crossing the crosswalk all at once. In this case, a large number of pedestrians have similar behavior in terms of speed and movement direction. On the other hand, there are cases where the distance between pedestrians on both ends is large, and it may be unsuitable for consolidating them into a single object group. In this case, the large number of pedestrians may be attempted to be clustered into two or more object groups using other factors.

For example, the grouping unit 31 may detect whether there is a gap in a large number of pedestrians where the distance between pedestrians becomes large, and cluster the large number of pedestrians into two or more object groups using the gap as a boundary. Other factors may be the subclass of pedestrians in the CPM object classification, similarity of pedestrian clothing, and the like. On the other hand, the grouping conditions do not necessarily have to include conditions related to the behavior of the object.

The grouping conditions may include conditions regarding the importance of objects. The importance of an object may be set according to the possibility that a vehicle that is expected to receive a message including object information will collide with the object (so-called collision probability). The importance of an object at a position that is directly visible from a vehicle that is expected to receive a message including object information may be set to be relatively low. The importance of an object at a position that is not directly visible from the vehicle (i.e., in a blocked area) may be set to be relatively high.

For example, the grouping unit 31 may group objects whose importance is lower than a predetermined value. The grouping unit 31 may exclude the object whose importance is higher than a predetermined value from the grouped target. On the other hand, the grouping conditions do not necessarily have to include a condition regarding the importance of the object.

The grouping conditions may include conditions related to the road shape. The grouping unit 31 may refer to the road map data stored in the road data storage 42 in order to determine this condition. Further, the grouping unit 31 may refer to the lane ID and the longitudinal lane position in the DF of the map matching position in the detected object container of the received CPM. For example, the grouping unit 31 may group multiple vehicles existing in the same lane on a road. The grouping unit 31 may exclude vehicles that are in different lanes on a road from the grouped target.

Here, the grouping condition may include conditions related to prediction of future behavior of the object, in addition to conditions related to the road shape. For example, the grouping unit 31 may perform grouping by referring to turn signal information of other vehicles detected by the sensor 40, turn signal information of other vehicles acquired from the received message, or lane change schedule information. The grouping unit 31 may exclude from grouping multiple vehicles that are on the same lane on the road, a vehicle that is using a blinker or planning to change lanes.

On the other hand, the grouping condition do not need to include conditions related to road shapes. In this case, the grouping condition may include a condition regarding prediction of the future behavior of the object.

The grouping conditions may include conditions regarding the vulnerability of the objects. For example, when the object is determined not to be a vulnerable road user, the grouping unit 31 may group the object. When the object is recognized as a vulnerable road user, the grouping unit 31 may exclude the object from the grouped object. On the other hand, the grouping conditions do not necessarily have to include conditions regarding the vulnerability of the object.

The grouping condition may include conditions regarding the communication congestion state in the periphery of the communication device 21. For example, the grouping unit 31 may group each object when the degree of congestion in communication exceeds a predetermined level. When the degree of communication congestion is equal to or lower than a predetermined level, the grouping unit 31 may determine not to group the objects or aggregate the objects into the object group. The congestion level may be, for example, the usage rate of radio resources available for short-range communication. Along with or instead of the congestion degree, communication load, traffic condition data, and the like may be used as a factor for determining whether to perform the grouping.

As described above, the grouping unit 31 determines the grouping manner for multiple objects, and provides the result to the message generation unit 32. In addition, when the number of targets that can be handled by the message is sufficiently small, the processing by the grouping unit 31 may be skipped, and the message may be generated and transmitted without aggregating information on each object.

The message generation unit 32 generates a new message that is to be the transmission target. The message generated by the message generation unit 32 is a message including object information, for example, CPM. The message generation unit 32 may aggregate multiple received messages into a new message. The message generation unit 32 may aggregate one or more received messages and information about objects perceived using the sensors 40 of the system 20 into the new message. The messages to be aggregated may include CAM, DENM, and the like, in addition to CPM.

Aggregating messages may include generating aggregation information that aggregates multiple objects into a single object group. The aggregation information in which multiple objects are aggregated into one object group may include aggregation information in which multiple objects, each having individual information, are aggregated into one object group. The aggregation information that aggregates multiple objects into one object group may include aggregation information that aggregates one or more aggregated pieces of information and one or more objects that have individual information into one object group. The aggregation information in which multiple objects are aggregated into one object group may include aggregation information in which multiple pieces of aggregation information have been aggregated into one object group. Further, the aggregation information in which multiple objects are aggregated into one object group may include aggregation information in which some objects are extracted from one or more pieces of aggregation information and re-aggregated. Here, the aggregation information may include information indicating the number of aggregated objects, i.e., the number of objects constituting one object group.

The message generation unit 32 generates a message including aggregation information in which objects to be aggregated among multiple objects are aggregated into the object group based on the group assignment determined by the grouping unit 31. The aggregation information may be stored in the perceived object container in the CAM. For object information that has not been grouped and aggregated, one perceived object container may be assigned to one object. For the aggregation information of grouped and aggregated objects, one perceived object container may be assigned to one object group. An example of how aggregation information is handled in the perceived object container will be described below.

A new object **ID** may be assigned to the aggregated object group. The object **ID** may be a list of the object IDs of all the objects that constitute the object group.

The sensor **ID** list may be a list of sensor IDs for all sensors that provided measurement data for each object constituting the object group.

The object confidence may be a confidence associated with the aggregated object group. The object confidence may be an average value of the confidence of each object constituting the object group. The object confidence may be the lowest confidence among the confidence of each object constituting the object group.

The absolute distance may be the absolute distance to the reference point of the ITS-S or the reference point of the object group at the time of measurement. The relative velocity may be the relative velocity at which the reference point of the object group moves as viewed from the reference point of the ITS-S at the time of measurement. The relative acceleration may be the relative acceleration at which a reference point of the object group moves as viewed from a reference point of the ITS-S at the time of measurement.

The dimensions may be expressed by dimensions of a virtual rectangle or rectangular parallelepiped that includes all the objects that constitute the object group. The reference point in the object group may be the center point of this rectangle or rectangular parallelepiped.

When all objects constituting the object group are of the same type, the classification may be based on that type. The classification may be other classification when the objects of different types exist in a mixed manner among the objects constituting the object group, or may be an additional classification indicating the mixed manner. In the classification DF, a flag may optionally be provided to indicate whether it is an individual object or the object group.

Optionally, a DF and/or DE may also be provided that provides the number of objects constituting the object group, the density of objects in the object group, and the like. The density of objects in the object group may be the density of objects within a rectangle or a rectangular solid defining the above-described dimensions.

Also, for single objects that are not grouped, the DF and/or DE may be optionally provided for providing information whether the object is a vulnerable road user or not. In particular, when the objects of the same type are not grouped in the grouping, it is preferable to provide information on the vulnerability of the objects, which is the reason why they were not grouped.

The message transmission unit 33 converts messages such as CPM generated by the message generation unit 32 into data suitable for transmission and transmits the converted data to the peripheral area. The CPM can be transmitted by point-to-multipoint communication. However, the CPM may be transmitted by a communication method other than point-to-multipoint communication, such as point-to-point communication.

When the size of the encoded CPM exceeds a maximum transmission unit, the message transmission unit 33 divides the CPM into multiple parts and transmits them. When the CPM is divided, the receiving communication device may combine the data of the CPM into one after completing reception of all the divided CPMs.

After the message containing the aggregation information is transmitted, it is processed by the receiving vehicles and RSUs. For example, a receiving vehicle may use the aggregation information for automated driving or driving assistance. In the automated driving, information on a group of objects contained in the aggregation information may be used for speed planning and vehicle trajectory planning to ensure safety of the object group. In the driving assistance, the information on the object group contained in the aggregation information may be used in applications such as a PCS system (Pre-Crash Safety System) and an AES system (Automatic Emergency Steering System) for avoiding collisions with the group of objects. In addition, in the driving assistance, the information may be used to notify the driver of the vehicle of the presence of the object group. The receiving RSU may use the aggregation information to further share with other vehicles and may use it to generate statistical data.

Here, the correspondence between the configuration diagram of the CPS shown in FIG. 4 and the functions of the controller 23 shown in FIG. 9 will be described. The function of the message acquisition unit 30 is at least a part of the function of the CPM decoder 1242 and the CPM reception management unit 1244. The function of generating and transmitting the CPM by the grouping unit 31 and message generation unit 32 is at least a part of the function of CPM transmission management unit 1243. The function of the message transmission unit 33 to finally generate and transmit data is at least a part of the function of the CPM encoder 1241.

### (CPM Generation and Transmission Process)

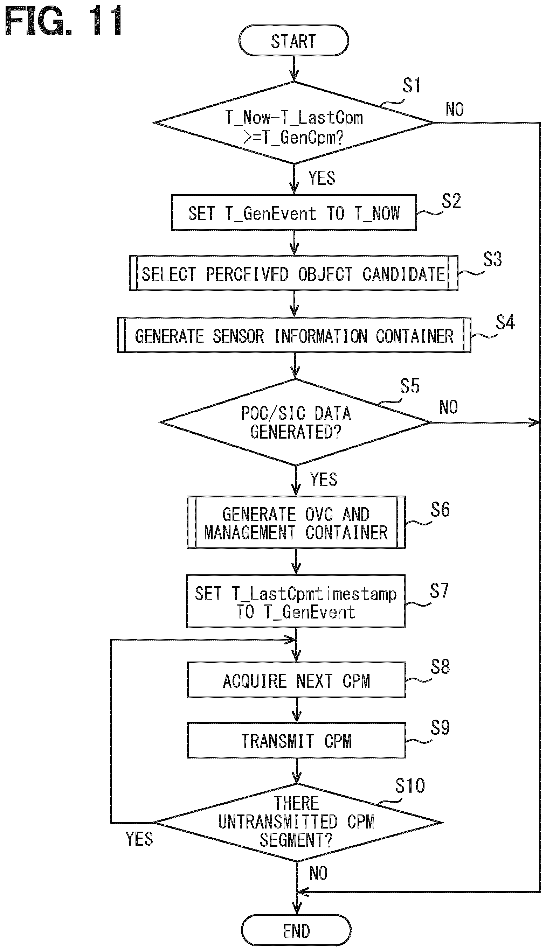

Next, an example of a processing method for generating and transmitting the CPM will be described with reference to the flowchart of FIG. 11. This processing method can also be called a communication method. The series of processes shown in FIG. 11 is executed at a predetermined execution cycle or based on a predetermined trigger. The predetermined cycle is preferably shorter than T_GenCpm, which will be described later. The series of processes may be executed by at least one processor 24b provided in the controller 23 so as to implement the functions of the message acquisition unit 30, the grouping unit 31, the message generation unit 32, and the message transmission unit 33.

In S1, it is determined whether T_Now-T_LastCpm is equal to or greater than T_GenCpm. T_Now is the current time. T_LastCpm is the time when the last CPM was transmitted. T_GenCpm is the period for generating the CPM. Therefore, in S1, it is determined whether the period for transmitting the CPM has elapsed since the last CPM was transmitted.

In S2, T_GenEvent is set to T_Now. T_GenEvent denotes the time when the event that generates the CPM occurs. By setting T_GenEvent to T_Now, the time at which the CPM is generated is the current time.

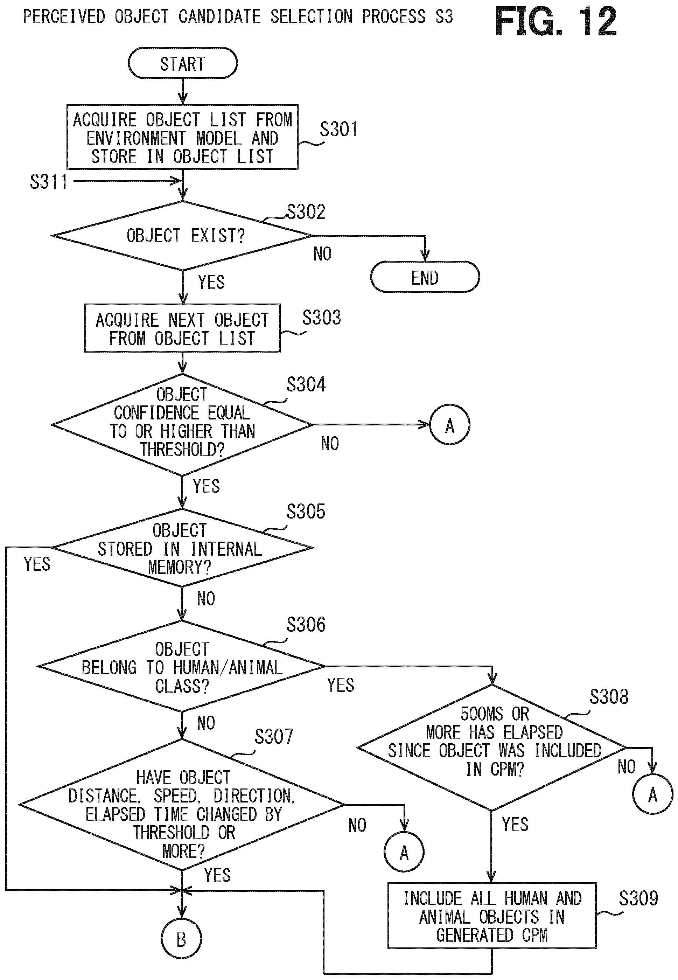

In S3, candidates for the perceived object are selected. The perceived object refers to an object that has object characteristics included in the perceived object container. The details of the process in S3 are shown in FIG. 12.

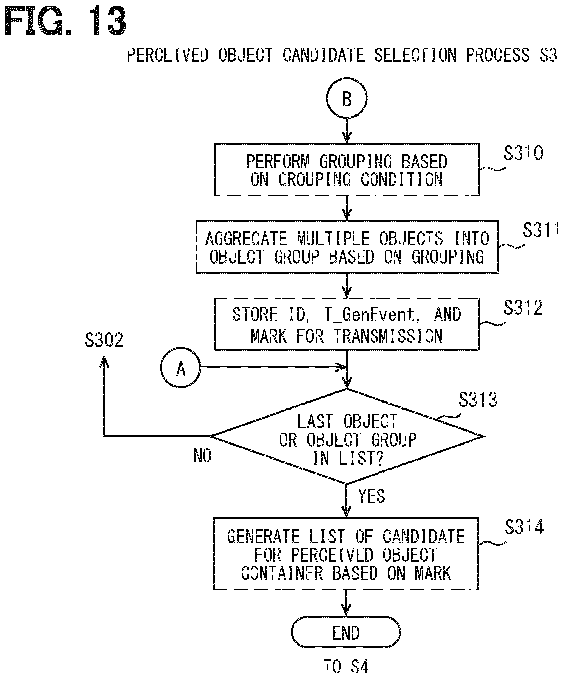

In S4, a sensor information container is generated. FIG. 13 shows the details of the process in S4.

In S5, it is determined whether POC (ie, Perceived Object Container) or SIC (ie, Sensor Information Container) data has been generated. When neither the POC nor the SIC has been generated, the determination result in S5 is NO. When the determination result in S5 is NO, the process of FIG. 11 ends without transmitting the CPM. When the determination result of S5 is YES, the process proceeds to S6.

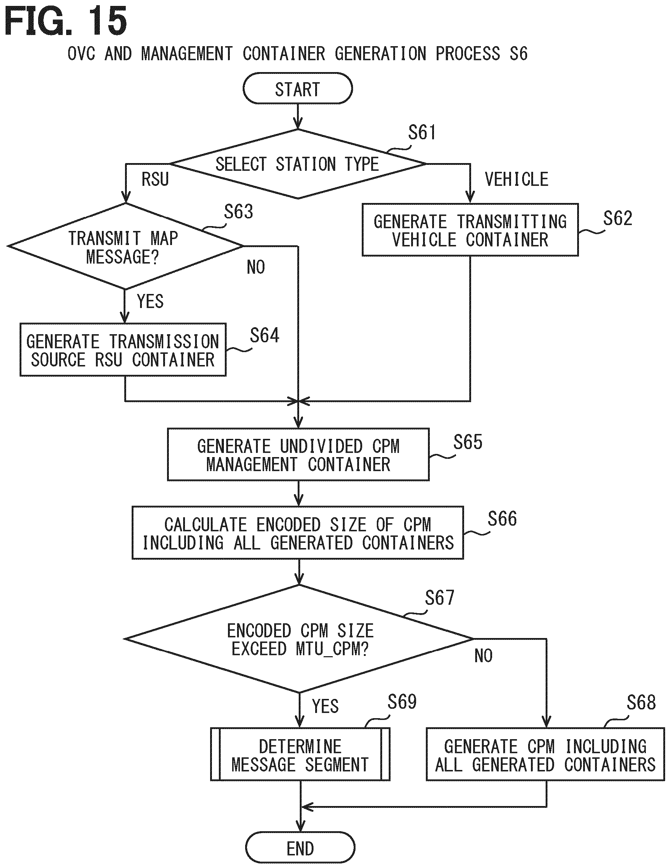

In S6, an OVC (when the subject transmitting the CPM is a vehicle) and a management container are generated. The process of S6 is shown in FIG. 15.

In S7, T_LastCpmtimestamp is set to T_GenEvent. T_LastCpmtimestamp indicates the time when the last CPM was generated.

In S8, the next CPM is obtained. In S9, the CPM acquired in S8 is transmitted.

In S10, it is determined whether there is an untransmitted CPM segment. When the determination result in S10 is YES, the process returns to S8. The untransmitted CPM segment is obtained and transmitted. When the determination result in S10 is NO, the series of processes of FIG. 11 ends.

Next, the process of selecting the perceived object candidate in S3 will be described in detail with reference to flowcharts of FIGS. 12 and 13.

In S301 shown in FIG. 12, a list of objects is obtained from the environment model and stored in the object list. The environmental model may be generated by the controller 23. The controller 23 may acquire an environmental model generated by another device inside or outside the system 20. The environment model is an example of a representation of the results of estimating the characteristics of various objects. The object list is a list for selecting candidates for perceived objects in the process of FIG. 12. The object list may include information on the confidence of the object. The objects included in the environmental model may include objects perceived by the sensor 40. The object included in the environmental model may be an object included in the object information of the CPM acquired by the message acquisition unit 30.

In S302, it is determined whether there is an object in the object list. When the determination result in S302 is NO, the process of S3 ends and proceeds to S4. When the determination result of S302 is YES, the process proceeds to S303.

In S303, the next object is acquired from the object list. In S304, it is determined whether the object confidence is equal to or greater than a preset threshold value. It should be noted that S304 may be omitted and the process may proceed to S305. For example, when the object confidence has not been determined, S304 may be omitted. When the determination result in S304 is NO, the process proceeds to S311 in FIG. 13. When the determination result of S304 is YES, the process proceeds to S305.

In S305, it is determined whether the object has been stored in a predetermined area of the internal memory. For example, the internal memory is the memory 24a provided in the controller 23, and the predetermined area is an area for storing data for generating the CPM. When the determination result in S305 is NO, that is, when the object acquired in S303 has already been stored in the internal memory, the process proceeds to S310 in FIG. 13. When the determination result of S305 is YES, the process proceeds to S306.

In S306, it is determined whether the object acquired in S303 belongs to a human or animal class. That is, it is determined whether the classification of the object acquired in S303 is a person or an animal. When the determination result in S306 is NO, the process proceeds to S307. In S307, it is determined whether at least one of the distance, speed, direction, or elapsed time of the object has changed by a value equal to or greater than a preset threshold value since the previous CPM transmission. When the determination result in S307 is YES, the process proceeds to S310 in FIG. 13. On the other hand, when the determination result in S307 is NO, the process proceeds to S311 in FIG. 13.

When the determination result in S306 is YES, the process proceeds to S308. In S308, it is determined whether 500 ms or more have passed since the object acquired in S303 was included in the CPM. When the determination result in S308 is NO, the process also proceeds to S311 in FIG. 13. When the determination result of S308 is YES, the process proceeds to S309. In S309, all people and animals are included in the generated CPM. Thereafter, the process proceeds to S310 in FIG. 13.

In S310 shown in FIG. 13, it is determined whether to group the objects in the object list based on the grouping conditions. In S311, the multiple objects are aggregated into the object group based on the grouping determined in S310.

In S312, the object ID, T_GenEvent are stored in the internal memory and the stored information is marked for transmission.

In S313, it is determined whether the object or object group is the last in the object list. When the determination result in S311 is NO, the process returns to S303. When the determination result of S313 is YES, the process proceeds to S314. In S314, a list of candidates for perceived object containers is generated based on the marks. After execution in S314, the process proceeds to S4 in FIG. 11.

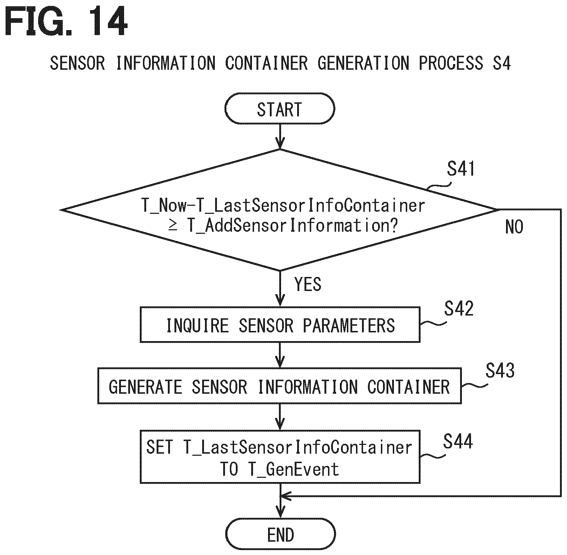

Next, the processing method for generating the sensor information container in S4 will be described in detail with reference to the flowchart in FIG. 14.

In S41, it is determined whether the value obtained by subtracting T_LastSensorInfoContainer from T_Now is equal to or greater than T_AddSensorInformation. T_LastSensorInfoContainer is the time when the last sensor information container was generated. T_AddSensorInformation indicates the period for adding the sensor information container. When the determination result in S41 is NO, the process of FIG. 14 ends and proceeds to S5 in FIG. 11. When the determination result of S41 is YES, the process proceeds to S42.

In S42, a database in which the sensor parameters are stored is inquired about the sensor parameters, and the sensor parameters are acquired. In S43, a sensor information container is generated based on the sensor parameters acquired in S42. In S44, T_LastSensorInfoContainer is set to T_GenEvent. In other words, the generation time of the sensor information container is set as the time when S2 is executed at the next generation of the CPM. When the process of FIG. 14 ends, the process proceeds to S5 of FIG. 11.

Next, the process method for generating the OVC and management container in S6 will be described in detail with reference to the flowchart in FIG. 15.

In S61, a station type is selected. When the station type is a vehicle, the process proceeds to S62. In S62, the OVC is generated. After execution in S62, the process proceeds to S65.

When it is determined in S61 that the station type is RSU, the process proceeds to S63. In S63, it is determined whether to transmit a MAP message. The MAP message is a message that provides the shape of intersections or road segments in the periphery of the RSU. When the determination result in S63 is YES, the process proceeds to S64. In S64, the source RSU container that contains the map message is generated. Then, the process proceeds to S65. When the determination result in S63 is NO, the process proceeds to S65 without executing S64.

In S65, a management container for an undivided CPM is generated. The management container generated here may include station type, reference point, segmentation information, and number of perceived objects. Additionally, the management container may include information about the grouping conditions used to determine the groupings. The information on the grouping condition may be a flag indicating the grouping condition, or may be the actual condition.

In S66, the encoding size of the CPM including all the generated containers is calculated. Additionally, the CPM can include a free space addendum container. When the free space addendum container is generated, the encoding size of the CPM is calculated including the size of the free space addendum container.

In S67, it is determined whether the size of the encoded CPM exceeds MTU_CPM. MTU_CPM is the maximum transmission unit of one CPM and is preset. MTU_CPM is determined depending on the maximum transmission unit of the access layer 130.

When the determination result in S67 is NO, the process proceeds to S68. In S68, the CPM including all the generated containers is generated. Thereafter, the process proceeds to S7 in FIG. 11. On the other hand, when the determination result in S67 is YES, the process proceeds to S69. In S69, segments of the message are determined in order to divide the message. Thereafter, the process proceeds to S203.

### (Operation and Effects)

The operation and effect of the first embodiment described above will be described below.

According to the first embodiment, the transmitted message includes object group aggregation information based on a grouping of objects perceived using the sensor. By aggregating object information that can be grouped together into the object group, it is possible to reduce an increase in the amount of information or the number of messages compared to a case in which multiple objects are each transmitted as individual information. Therefore, it is possible to reduce either or both of the communication load and the processing load in message processing.

Further, according to the first embodiment, the objects of the same type are grouped together. In the case where the object group is configured in this manner, when the display device mounted on the vehicle notifies or warns the driver of object information, the object group can be described in a simple and concise manner. It is also possible to improve the ease of predicting the behavior, such as speed, of the object group.

Further, according to the first embodiment, objects of the same type perceived by sensors of the same type are grouped together. When the object group is configured in this manner, the information in the CPM perceived object container and the information in the sensor information container referenced thereby can be simply associated. Therefore, it is possible to easily use the information.

Furthermore, according to the first embodiment, whether the multiple objects are grouped is determined depending on the positions of the objects. For example, by grouping objects whose positions are within a preset distance from each other into the object group, it becomes easier for the vehicle that has received the message to plan a response, such as collision avoidance, for the object group.

Furthermore, according to the first embodiment, it is determined whether to group multiple objects according to the similarity of behavior between the multiple objects. By grouping a number of objects with similar behavior into the object group, it is possible to easily express the behavior of the object group.

Furthermore, according to the first embodiment, it is determined whether to group the multiple objects depending on the confidence of the sensor perception. In particular, by grouping the objects with similar confidence of the sensor that perceived the objects, the handling of the object group is easy even when the receiving ITS-S is designed to change the handling of the object group depending on the confidence of the sensor.

Furthermore, according to the first embodiment, whether to group multiple objects is determined depending on the importance of the objects. In particular, by transmitting the objects of high importance as individual object information rather than grouping them into the object group, it becomes easier to take appropriate operations for the objects.

Furthermore, according to the first embodiment, it is determined whether to group multiple objects depending on the lane on the road on which the objects are present. In particular, by not grouping vehicles in different lanes together in the same object group, it is possible to appropriately store lane **ID** information in the CPM.

Furthermore, according to the first embodiment, whether to group multiple objects is determined based on the prediction of the future behavior of the objects. By grouping the objects with similar future behavior predictions into the object group, it is possible to reduce the possibility that the object groups will be separated in the future and will have to be handled separately.

Furthermore, according to the first embodiment, whether to group multiple objects is determined depending on the communication congestion state around the communication device 21. When the communication is congested, it is possible to avoid further strain on the communication load by consolidating multiple objects into a smaller number of object groups.

Furthermore, according to the first embodiment, information indicating the grouping conditions determined in the grouping is added to the message. By sharing the grouping conditions with the receiving ITS-S, the grouping conditions can be used as reference information when grouping and aggregating the objects on the receiving side.

Furthermore, according to the first embodiment, the dimensions of a group of objects are expressed by the dimensions of a rectangular parallelepiped that includes all of the objects aggregated in the object group. In this way, it is possible to store the dimensions of the object group in the DF similar to the perceived object container that stores the individual objects in the CPM.

In addition, according to the first embodiment, when multiple objects of the same type are not grouped during grouping, the message includes information indicating whether the objects that are not grouped are vulnerable road users. In this way, it becomes easier to perform appropriate operations for the objects that have not been grouped.

### (Second Embodiment)

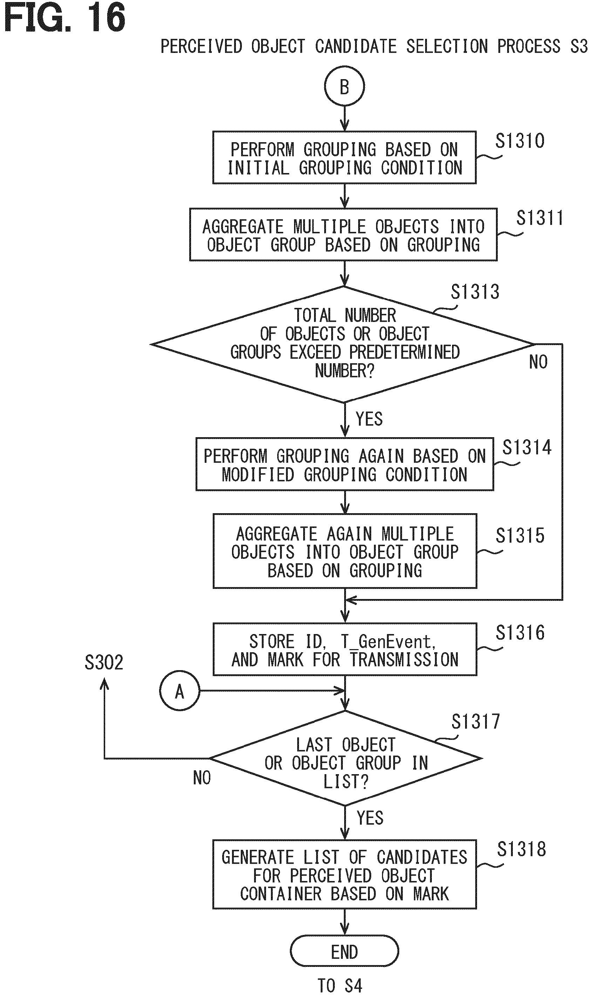

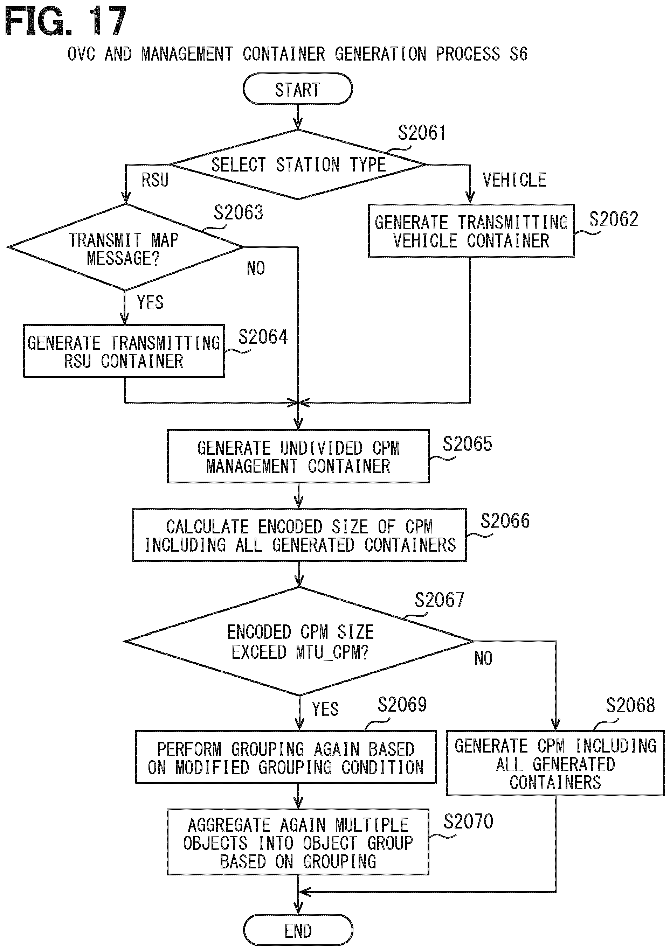

As shown in FIGS. 16 and 17, a second embodiment is a modification of the first embodiment. The second embodiment will be described with focus on its differences from the first embodiment.

The grouping unit 31 of the second embodiment determines whether to group multiple objects based on an initial grouping condition. Thereafter, the grouping unit 31 modifies the grouping conditions in accordance with the total number of objects and object groups after aggregation in the grouping based on the initial grouping conditions or the expected message size. Then, the grouping unit 31 again determines whether to group the multiple objects based on the modified grouping conditions.

For example, when the total number of objects and object groups based on the initial grouping conditions exceeds a predetermined number, the grouping unit 31 may modify the grouping conditions. On the other hand, when the total number of objects and object groups based on the initial grouping conditions is less than a predetermined number, the grouping unit 31 may ultimately adopt the grouping under the initial grouping conditions without modifying the grouping conditions. The predetermined number here may be the maximum number of perceived object containers that can be loaded into one CPM in terms of format. That is, in order to avoid dividing the CPM, the initial grouping conditions are modified to conditions that result in higher aggregation.

Here, an example of a processing method based on the total number will be described with reference to the flowchart of FIG. 16. The process in FIG. 16 can be used in place of the process in FIG. 13 in the first embodiment.

In S1310 shown in FIG. 16, it is determined whether to group the objects in the object list based on the initial grouping conditions. In S1311, the multiple objects are aggregated into the object group based on the grouping determined in S1310.

In S1313, it is determined whether the total number obtained by adding up the number of objects after aggregation and the number of objects exceeds a predetermined number that has been set in advance. When the determination result of S1313 is YES, the process proceeds to S1314. When the determination result in S1313 is NO, the process proceeds to S1316.

In S1314, the initial grouping conditions are modified to conditions that increase the degree of aggregation, and grouping is performed again based on the modified grouping conditions. In S1315, the multiple objects are aggregated into the object group based on the grouping determined in S1314. The processes in S1316 to S1318 are similar to the processes in S312 to S314 in FIG. 13.

Instead of count-based processing, message size-based processing can be employed. For example, when the message size after aggregation in grouping based on the initial grouping conditions exceeds the above-described maximum transmission unit, the grouping unit 31 may modify the grouping conditions. On the other hand, when the message size is equal to or smaller than the maximum transmission unit, the grouping unit 31 may ultimately adopt the grouping under the initial grouping condition without modifying the grouping condition. That is, in order to avoid dividing the CPM, the initial grouping conditions are modified to conditions that result in higher aggregation.

Here, an example of a processing method based on the message size will be described with reference to a flowchart of FIG. 17. Processes in FIG. 17 can be used in place of the processes in FIG. 15 in the first embodiment. In this case, the process of S3 may be the same as that of the first embodiment shown in FIG. 13.

The processes in S2061 to S2068 in FIG. 17 are similar to the processes in S61 to S68 in FIG. 15. On the other hand, when it is determined in S2067 that the size of the encoded CPM exceeds MTU_CPM, ie, the maximum transmission unit, then in S2069 the message is not divided.

In S2069, the initial grouping conditions are modified to conditions that increase the degree of aggregation, and grouping is performed again based on the modified grouping conditions. The modified grouping condition is preferably a condition that ensures that the message can be transmitted without being divided. In S2070, the multiple objects are aggregated into the object group based on the grouping determined in S2069.

### (Third Embodiment)

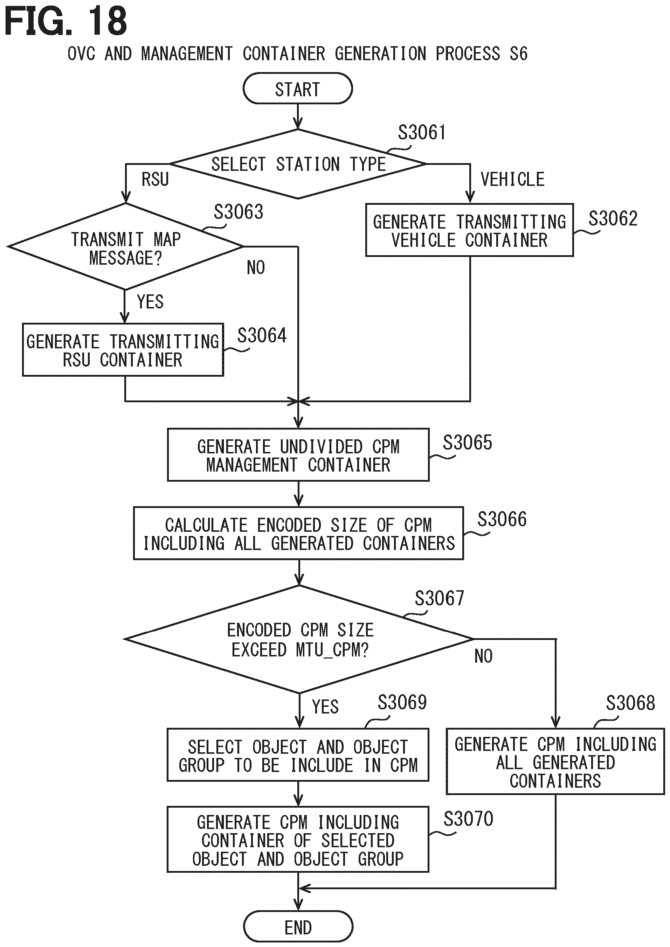

As shown in FIG. 18, a third embodiment is a modification of the first embodiment. The third embodiment will be described mainly on configurations different from those of the first embodiment.

The message generation unit 32 aggregates the multiple objects into objects and object groups based on the grouping by the grouping unit 31. Thereafter, the message generation unit 32 determines whether to include information on each object and each object group after aggregation in the message. The message generation unit 32 excludes objects and object groups that are determined not to be included in the message. The message generation unit 32 generates a message including information on the object and the object group that have been determined to be included in the message.

The determination here may be based on predefined redundancy mitigation rules. The redundancy mitigation rules may include frequency-based redundancy mitigation rules. That is, when the number of historical CPMs containing information for the same object and object groups exceeds a preset threshold, the object and object groups perceived by the local sensor may be excluded from the CPM being generated.

The redundancy mitigation rules may include dynamic-based redundancy mitigation rules. That is, when the difference between the current estimated position (or estimated velocity) of the reference point of an object or group of objects included in the last CPM received and the current estimated position (or estimated velocity) of this object or object group as perceived by a local sensor is equal to or lower than a preset threshold, this object or group of objects may be excluded.

The redundancy mitigation rules may include confidence-based redundancy mitigation rules. That is, when historical CPMs contain information about the same object or group of objects, and the confidence of this object or group of objects in these historical CPMs is higher than the confidence in the local sensor perception, then this object or object group may be excluded.

Other redundancy mitigation rules may include entropy-based redundancy mitigation rules, object self-declaration redundancy mitigation rules, distance-based redundancy mitigation rules, and the like.

An example of the processing method will now be described with reference to the flowchart of FIG. 18. The process in FIG. 18 can be used in place of the process in FIG. 15 in the first embodiment.

The processes in S3061 to S3068 in FIG. 18 are similar to the processes in S61 to S68 in FIG. 15. On the other hand, when it is determined in S3067 that the size of the encoded CPM exceeds MTU_CPM, that is, the maximum transmission unit, then in S3069 the message is not divided.

In S3069, the object and object group to be included in the CPM are selected. In S3070, the CPM is generated that includes the containers of the object and object group selected in S3069.

According to the third embodiment described above, the message to be transmitted is a message that excludes objects and object groups that are determined not to be included in the message among the multiple objects perceived using the sensor. Furthermore, this determination is performed for the information of each object and each object group after aggregation based on the grouping. In other words, by aggregating object information and determining the necessity of transmission, it is possible to reduce an increase in the amount of information or the number of messages. Therefore, it is possible to reduce either or both of the communication load and the processing load in message processing.

### (Fourth Embodiment)

A fourth embodiment is a modification of the first embodiment. The fourth embodiment will be described mainly on configurations different from those of the first embodiment.

The message transmission unit 33 transmits the CPM at each predetermined first interval. Under these transmission conditions, the message generation unit 32 considers a case in which it is recognized that the dimension of the aggregated object group in the previously transmitted CPM has changed by more than a preset threshold value. In this case, the message transmission unit 33 changes the CPM transmission interval to a second interval that is shorter than the first interval.

That is, under normal circumstances, the CPM is transmitted at a first interval that is sufficiently longer than 100 ms, and when there is a large change in characteristics such as the shape of the object group, the transmission interval is changed to a second interval that is close to the minimum value of 100 ms. In this way, by transmitting information about the object group that tends to change dynamically at short intervals, the receiving vehicle or RSU can more easily respond to the dynamic changes in the object group.

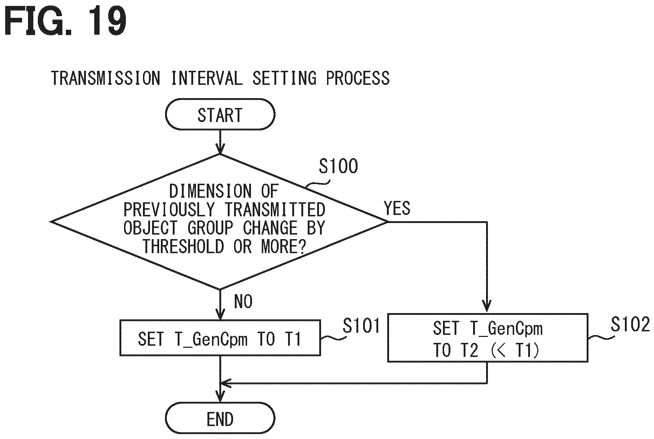

Here, an example of a processing method for setting the transmission cycle will be described with reference to a flowchart of FIG. 19. The process of FIG. 19 can be used by being inserted before the process of S1 of FIG. 11 in the first embodiment.

In S100 shown in FIG. 19, it is determined whether the dimensions of the object group have changed by a threshold or more in the object group information included in the previously transmitted CPM. When the determination result in S100 is NO, the process proceeds to S101. When the determination result in S100 is YES, the process proceeds to S102.

In S101, T_GenCpm is set to T1. T1 is a value corresponding to the first interval. After S101 is executed, the process proceeds to S1 in FIG. 11.

In S102, T_GenCpm is set to T2. T2 is a value corresponding to the second interval and is smaller than T1. After executing S102, the process proceeds to S1 in FIG. 11.

### (Other Embodiment)

Although multiple embodiments have been described above, the present disclosure is not construed as being limited to those embodiments, and can be applied to various embodiments and combinations within a scope that does not depart from the spirit of the present disclosure.

As a first modification, when the size of the encoded CPM exceeds the maximum transmission unit as a result of the processes in S2069 and S2070 in FIG. 17, the CPM may be divided.

As a second modification, when the size of the encoded CPM exceeds the maximum transmission unit as a result of the processes in S3069 and S3070 in FIG. 18, the CPM may be divided.

As a third modification, the architecture and messages of the US standard may be adopted as the architecture and messages for communicating object information. The architecture and messages of Japanese standards may be adopted as the architecture for communicating the object information. The grouping function or aggregation function of multiple objects into the object group of the present disclosure may be applied to various architectures and various messages adopted in each country or region.

As a fourth modification example, the system 20 may be an automated driving system or a driving assistance system as an in-vehicle system. In this case, the system 20 may further include driving assistance functions such as the automated driving planning function, a driving function, and an emergency brake.

As a fifth modification, the shape of the object group defined in the perceived object container may be represented by a shape other than a rectangle or a rectangular parallelepiped. For example, the shape of a group of object group may be represented by a number of points, such as a polygon. In other words, the area surrounded by multiple points that define a polygon may be an area that includes all of the objects that constitute the object group. The multiple points may be expressed in relative position coordinates from a reference point of the ITS-S. The multiple points may be expressed by relative position coordinates from a reference point of the object group. The dimensions of the perceived object container may be replaced by the coordinates of multiple points when the shape of the object group is represented by a polygon.

The message generation unit 32 may calculate the similarity of the perceived object group to the actual shape of a rectangle or a rectangular prism, and select whether to represent the shape of the object group as a rectangle or a rectangular prism, or as a polygon, depending on the similarity. That is, when the similarity is higher than a preset threshold, the shape of the object group may be represented as a rectangle or a rectangular parallelepiped. When the similarity is equal to or less than the threshold, the shapes of the object group may be represented by the polygon.

The controller and the method thereof described in the present disclosure may be implemented by a dedicated computer, which includes a processor programmed to execute one or more functions performed by computer programs. Alternatively, the device and its method according to the present disclosure may be implemented by a dedicated hardware logic circuit. Alternatively, the device and its method according to the present disclosure may be implemented by one or more dedicated computers including a combination of a processor executing a computer program and one or more hardware logic circuits. The computer program may also be stored on a computer-readable and non-transitory tangible storage medium as an instruction executed by a computer.

### (Disclosure of Technical Idea)

This description discloses multiple technical concepts described in multiple sections listed below. Some sections may be presented in a multiple dependent form in which a subsequent section refers to the preceding sections selectively. These sections written in the multiple dependent form define multiple technical ideas.

### (First Technical Idea)

A communication device is configured to communicate a message including object information, and the device includes: a grouping unit (31) configured to determine whether to perform grouping of a plurality of objects perceived by a sensor; a message generation unit (32) configured to generate the message including aggregation information in which the plurality of objects are aggregated into an object group based on the grouping; and a message transmission unit (33) configured to transmit the message including the aggregation information.

### (Second Technical Idea)

**In** the communication device according to the first technical idea, the grouping unit is configured to perform the grouping of the plurality of objects of a same type.

### (Third Technical Idea)

**In** the communication device according to the second technical idea, the grouping unit is configured to perform the grouping of the plurality of objects of the same type, the plurality of objects having been perceived by the same sensor.

### (Forth Technical Idea)

In the communication device according to any one of the first to third technical ideas, the grouping unit is configured to determine whether to perform the grouping of the plurality of objects depending on a position of the plurality of objects.

### (Fifth Technical Idea)

In the communication device according to any one of the first to fourth technical ideas, the grouping unit is configured to determine whether to perform the grouping of the plurality of objects in accordance with a similarity in behavior between the plurality of objects.

### (Sixth Technical Idea)

In the communication device according to any one of the first to fifth technical ideas, the grouping unit is configured to determine whether to perform the grouping of the plurality of objects depending on a confidence of perception of the sensor.

### (Seventh Technical Idea)

In the communication device according to any one of the first to sixth technical ideas, the grouping unit is configured to determine whether to perform the grouping of the plurality of objects depending on an importance of the plurality of objects.

### (Eighth Technical Idea)

In the communication device according to any one of the first to seventh technical ideas, the grouping unit is configured to determine whether to perform the grouping of the plurality of objects depending on a lane of a road on which the plurality of objects exist.

### (Ninth Technical Idea)

In the communication device according to any one of the first to eighth technical ideas, the grouping unit is configured to determine whether to group the plurality of objects depending on prediction of a future behavior of the plurality of objects.

### (Tenth Technical Idea)

In the communication device according to the first to ninth technical ideas, the grouping unit is configured to determine whether to group the plurality of objects depending on a communication congestion state in a periphery of the communication device.

### (Eleventh Technical Idea)

In the communication device according to the first to tenth technical ideas, the grouping unit is configured to: determine whether to perform the grouping of the plurality of objects based on an initial grouping condition; modify the grouping condition according to a total number of the plurality of objects and the object group after aggregation by the grouping based on the initial grouping condition or a message size after the aggregation; and determine whether to perform the grouping of the plurality of objects based on the modified grouping condition.

### (Twelfth Technical Idea)

In the communication device according to the first to eleventh technical ideas, the message generation unit is configured to represent a dimension of the plurality of object group included in the aggregation information by a dimension of a rectangular parallelepiped that includes all of the objects aggregated in the object group.

### (Thirteenth Technical Idea)

In the communication device according to the first to twelfth technical ideas, under a transmission condition where the message transmission unit transmits the message at a predetermined first interval, when the dimension of the object group aggregated in the previously transmitted message is determined to have changed by a predetermined threshold or more, the message transmission unit changes a transmission interval of the message to a second interval shorter than the first interval.

### (Fourteenth Technical Idea)

In the communication device according to the first to thirteenth technical ideas, the message generation unit is configured to generate a message including information indicating a grouping condition determined in the grouping.

### (Fifteenth Technical Idea)

In the communication device according to the first to fifteenth technical ideas, when the plurality of objects of a same type are not grouped in the grouping, the message generation unit generates a message including information indicating whether the plurality of objects that are not grouped are vulnerable or a road user.

### (Sixteenth Technical Idea)

A communication device is configured to communicate a message including object information, and the device includes: a grouping unit (31) configured to determine whether to perform grouping of a plurality of objects detected by a sensor; a message generation unit (32) configured to determine whether information of each object and each object group after aggregation based on the grouping is to be included in a message, exclude the object and the object group that are determined not to be included in the message, and generate the message including information of the object and the object group that are determined to be included in the message; and a message transmission unit (33) configured to transmit the generated message.

### (Seventeenth Technical Idea)

A communication method executed by at least one processor for communicating a message including object information, and the method includes: determining whether to perform grouping of a plurality of objects detected by a sensor; generating the message including aggregation information in which the plurality of objects are aggregated into an object group based on the grouping; and transmitting the message including the aggregation information.

### (Eighteenth Technical Idea)

A V2X communication system is mounted on a vehicle or a roadside unit for communicating a message including object information with a different vehicles or a different roadside unit, and the V2X communication system includes: a sensor (40) configured to detect an object and generate the object information related to the detected object; a processing system (33) including at least one processor (34b) and at least one storage medium (34a); and a communication circuit (32) including an antenna (32a). The storage medium stores a grouping condition. The at least one processor is configured to: acquire a message that includes the object information related to the object and is transmitted from the different vehicle or the different roadside unit through the communication circuit; acquire the object information from the sensor; determine whether to group a plurality of objects based on the object information included in the message and the object information from the sensor based on the grouping condition; generate a new message including aggregation information in which the plurality of objects are aggregated into an object group based on the grouping; and transmit the message including the aggregation information to the different vehicle or the roadside unit through the communication circuit.

### (Nineteenth Technical Idea)

A V2X communication is used for communicating a message including object information with a different vehicle or a different roadside unit, and the V2X communication method includes: acquiring a message that includes the object information related to the object and is transmitted from the different vehicle or the different roadside unit through the communication circuit; acquiring object information from a sensor that detects an object and generates the object information related to the detected object; determining whether to group a plurality of objects based on the object information included in the message and the object information from the sensor based on the grouping condition stored in at least one storage medium; generating a new message including aggregation information in which the plurality of objects are aggregated into an object group based on the grouping; and transmitting the message including the aggregation information to the different vehicle or the roadside unit through the communication circuit.

## Claims

1. A communication device configured to communicate a message including object information, the device comprising:
a grouping unit (31) configured to determine whether to perform grouping of a plurality of objects perceived by a sensor;
a message generation unit (32) configured to generate the message including aggregation information in which the plurality of objects are aggregated into an object group based on the grouping; and
a message transmission unit (33) configured to transmit the message including the aggregation information.

2. The communication device according to claim 1, wherein
the grouping unit is configured to perform the grouping of the plurality of objects of a same type.

3. The communication device according to claim 2, wherein
the grouping unit is configured to perform the grouping of the plurality of objects of the same type, the plurality of objects having been perceived by the same sensor.

4. The communication device according to claim 1, wherein
the grouping unit is configured to determine whether to perform the grouping of the plurality of objects depending on a position of the plurality of objects.

5. The communication device according to claim 1, wherein
the grouping unit is configured to determine whether to perform the grouping of the plurality of objects in accordance with a similarity in behavior between the plurality of objects.

6. The communication device according to claim 1, wherein
the grouping unit is configured to determine whether to perform the grouping of the plurality of objects depending on a confidence of perception of the sensor.

7. The communication device according to claim 1, wherein
the grouping unit is configured to determine whether to perform the grouping of the plurality of objects depending on an importance of the plurality of objects.

8. The communication device according to claim 1, wherein
the grouping unit is configured to determine whether to perform the grouping of the plurality of objects depending on a lane of a road on which the plurality of objects exist.

9. The communication device according to claim 1, wherein
the grouping unit is configured to determine whether to group the plurality of objects depending on prediction of a future behavior of the plurality of objects.

10. The communication device according to claim 1, wherein
the grouping unit is configured to determine whether to group the plurality of objects depending on a communication congestion state in a periphery of the communication device.

11. The communication device according to claim 1, wherein
the grouping unit is configured to:
determine whether to perform the grouping of the plurality of objects based on an initial grouping condition;
modify the grouping condition according to a total number of the plurality of objects and the object group after aggregation by the grouping based on the initial grouping condition or a message size after the aggregation; and
determine whether to perform the grouping of the plurality of objects based on the modified grouping condition.

12. The communication device according to claim 1, wherein
the message generation unit is configured to represent a dimension of the object group included in the aggregation information by a dimension of a rectangular parallelepiped that includes all of the objects aggregated in the object group.

13. The communication device according to claim 12, wherein
under a transmission condition where the message transmission unit transmits the message at a predetermined first interval, when the dimension of the object group aggregated in the previously transmitted message is determined to have changed by a predetermined threshold or more, the message transmission unit changes a transmission interval of the message to a second interval shorter than the first interval.

14. The communication device according to claim 1, wherein
the message generation unit is configured to generate a message including information indicating a grouping condition determined in the grouping.

15. The communication device according to claim 1, wherein
when the plurality of objects of a same type are not grouped in the grouping, the message generation unit generates a message including information indicating whether the plurality of objects that are not grouped are vulnerable or a road user.

16. A communication device configured to communicate a message including object information, the device comprising:
a grouping unit (31) configured to determine whether to perform grouping of a plurality of objects detected by a sensor;
a message generation unit (32) configured to
determine whether information of each object and each object group after aggregation based on the grouping is to be included in a message,
exclude the object and the object group that are determined not to be included in the message, and
generate the message including information of the object and the object group that are determined to be included in the message; and
a message transmission unit (33) configured to transmit the generated message.

17. A communication method executed by at least one processor for communicating a message including object information, the method comprising:
determining whether to perform grouping of a plurality of objects detected by a sensor;
generating the message including aggregation information in which the plurality of objects are aggregated into an object group based on the grouping; and
transmitting the message including the aggregation information.
